(19) Europäisches Patentamt
European Patent Office
Office européen des brevets

(11) **EP 3 848 698 A1**

(12) **EUROPEAN PATENT APPLICATION**
published in accordance with Art. 153(4) EPC

(43) Date of publication:
**14.07.2021 Bulletin 2021/28**

(51) Int Cl.:
**G01N 21/84** (2006.01)  **F01D 25/00** (2006.01)
**F02C 7/00** (2006.01)

(21) Application number: **19880347.0**

(22) Date of filing: **31.10.2019**

(86) International application number:
**PCT/JP2019/042729**

(87) International publication number:
**WO 2020/090959 (07.05.2020 Gazette 2020/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **31.10.2018  JP 2018205303**

(71) Applicant: **MITSUBISHI HEAVY INDUSTRIES, LTD.**
**Chiyoda-ku,**
**Tokyo 100-8332 (JP)**

(72) Inventors:
• **FUKE Yasutaka**
  **Tokyo 100-8332 (JP)**

• **KOMATSU Naotaka**
  **Tokyo 100-8332 (JP)**
• **ASANO Shin**
  **Tokyo 100-8332 (JP)**
• **ONODERA Sho**
  **Tokyo 100-8332 (JP)**
• **KOBAYASHI Tetsuhei**
  **Tokyo 100-8332 (JP)**

(74) Representative: **Hoffmann Eitle**
**Patent- und Rechtsanwälte PartmbB**
**Arabellastraße 30**
**81925 München (DE)**

(54) **INSPECTION TUBE DRIVE CONTROL DEVICE, INSPECTING DEVICE, INSPECTING METHOD, PROGRAM FOR INSPECTING DEVICE, AND GUIDE JIG**

(57)     This inspection tube drive control device is provided with: an inverse analysis unit (83) which performs an analysis to move a flexible tube along a predetermined route within an object being inspected, from a start point to a target point of the route; and a forward analysis unit (84) which, on the basis of analysis results from the inverse analysis unit (83), acquires, as analysis operation amounts, operation amounts for an attitude actuator capable of adjusting the attitude of the tube when the tube is positioned at each position on the route, and an advancing and retreating actuator which causes the tube to advance and retreat.

FIG. 11

**EP 3 848 698 A1**

**Description**

Technical Field

The present invention relates to a drive control device for an inspection tube, an inspection device, an inspection method, a program for an inspection device, and a guide jig.

This application claims the priority of Japanese Patent Application No. 2018-205303 filed in Japan on October 31, 2018, the content of which is incorporated herein by reference.

Background Art

A rotary machine such as a steam turbine and a gas turbine requires regular inspection for an interior of a casing. When the casing is removed and the interior is opened during the regular inspection, it takes a lot of time in carrying out inspection work. Therefore, there is a need for a method of inspecting the interior without opening the casing.

Specifically, for example, PTL 1 discloses an inspection device capable of inspecting an interior of a turbine by inserting an insertion portion into the turbine via a tail pipe from an upstream side of a combustor. The inspection device includes the insertion portion inserted into the tail pipe and an imaging device connected to one end of the insertion portion and disposed outside the combustor. The insertion portion has a plurality of tubular members disposed coaxially, a joint portion for rotatably connecting adjacent tubular members to each other, and a reflective member disposed at a position corresponding to the joint portion. In the inspection device, light entering from a tip of the insertion portion is reflected via the reflective member, and is guided to a rear end of the insertion portion to which the imaging device is connected. In this manner, an image of the tip of the insertion portion is transmitted to the imaging device, and the interior of the turbine can be visually observed by a monitor.

Citation List

Patent Literature

[PTL 1] Japanese Unexamined Patent Application Publication No. 2000-162157

Summary of Invention

Technical Problem

The inspection device of PTL 1 has a structure in which a plurality of tubular members rotate with each other. Accordingly, the insertion portion can be inserted into vicinity of an inlet of the turbine from the inside of the tail pipe. However, it is difficult to insert the insertion portion into a deep portion inside the turbine having a plurality of blades and a complicated internal shape.

In addition, when an operator inspects the turbine by operating a tube such as a highly flexible fiberscope from an outside of the turbine, it is extremely difficult to cause the tube to reach the deep portion inside the turbine which is not visible, without coming into contact with a rotor blade or a stator blade. As a result, there is a possibility that inspection quality may be significantly degraded depending on a skilled level of the operator. Therefore, regardless of a technique of the operator, it is desirable that the tube is allowed to accurately reach a target position even in a region which is less likely to be visible.

The present invention provides a drive control device for an inspection tube, an inspection device, an inspection method, a program for an inspection device, and a guide jig, which enable a tube to accurately reach a target inspection position even in a region which is less likely to be visible. Solution to Problem

According to an aspect of the present invention, there is provided a drive control device for an inspection tube including a flexible tube into which an inspection cable having a sensor in a tip is insertable, a posture actuator capable of adjusting a posture of the tube, and an advancing and retreating actuator that causes the tube to advance and retreat. The drive control device for an inspection tube includes an inverse analysis unit that performs an analysis to move the tube along a predetermined route inside an inspection object from a start point to a target point of the predetermined route, and a forward analysis unit that acquires an operation amount of each of the posture actuator and the advancing and retreating actuator when the tube is located at each position on the route, as an analysis operation amount, based on an analysis result of the inverse analysis unit.

According to this configuration, it is possible to recognize the operation amount of the posture actuator and the advancing and retreating actuator which is needed to move the tube along the predetermined route. Therefore, even when the route is complicated, based on the analysis operation amount, the tube can be properly moved while contact with an obstacle is prevented. As a result, the tube can accurately reach the target point without damaging the inspection object.

In addition, the drive control device for an inspection tube according to another aspect of the present invention may further include a route determination unit that acquires three-dimensional shape data inside the inspection object in advance, and determines the route, based on the three-dimensional shape data.

According to this configuration, an accurate route is determined, based on the three-dimensional shape data inside the inspection object. Therefore, the tube can be moved along the exact route to the target point. Therefore, it is possible to prevent the contact with the obstacle when the tube is moved inside the inspection object.

In addition, in the control device for an inspection tube according to another aspect of the present invention, the inspection object may be a turbine including a rotor rotating around an axis and having a plurality of rotor blades disposed in a circumferential direction, and a plurality of stator blades disposed in the circumferential direction to correspond to the plurality of rotor blades. The route determination unit may determine the route to pass at least one of an intermediate position between the rotor blades adjacent to each other and a central position between the stator blades.

According to this configuration, the route determination unit determines the route to pass at least one of the intermediate positions between the rotor blades and the stator blades which are adjacent to each other. Therefore, even if the tube slightly deviates from the route when the tube actually moves, it is possible to prevent contact with the rotor blade or the stator blade. Therefore, it is possible to prevent the contact with the obstacle when the tube is moved inside the inspection object.

In addition, the control device for an inspection tube according to another aspect of the present invention may further include a correction unit that acquires a self-weight deflection amount of the tube which is generated due to a self-weight of the tube, and corrects the analysis operation amount, based on the self-weight deflection amount.

According to this configuration, it is possible to prevent the influence of a weight of the actual tube, and the tube can be moved in a form close to the analysis result obtained by the inverse analysis unit. Therefore, the tube can be more accurately moved.

In addition, according to another aspect of the present invention, there is provided an inspection device including an inspection cable having a sensor in a tip, an inspection tube having a flexible tube into which the inspection cable is insertable, a posture actuator capable of adjusting a posture of the tube, and an advancing and retreating actuator that causes the tube to advance and retreat, and the control device for an inspection tube. The control device for an inspection tube includes an output unit that controls driving of the posture actuator and the advancing and retreating actuator, based on the analysis operation amount.

According to this configuration, the inspection can be performed by preventing the following disadvantages. Before the tube reaches the target point, the tube may come into contact with the obstacle. Consequently, the tube may be clogged, may be caught on the obstacle, or may be unable to move forward to a deep portion. As a result, even a region which is less likely to be visible can be accurately inspected.

In addition, in the inspection device according to another aspect of the present invention, the sensor may have a camera capable of imaging an interior of the inspection object. The control device for an inspection tube may have a position estimation unit that estimates a position and a posture of the tube inside the inspection object, based on the analysis operation amount and information on the route, and a position correction unit that corrects a deviation of a position and a posture of the actual tube with respect to the position and the posture of the tube which are estimated by the position estimation unit, based on imaging information captured by the sensor.

According to this configuration, the position and the posture of the actual tube can be acquired, based on the imaging information captured by the sensor. Furthermore, the position correction unit can acquire a movement amount so that the acquired position and posture of the actual tube are adjusted to the estimated position and posture of the tube. In this manner, it is possible to correct a deviation of the position and the posture of the actual tube. Therefore, the tube can be more accurately moved to the target point.

In addition, in the inspection device according to another aspect of the present invention, the posture actuator may move a tip of the tube in parallel along a virtual plane orthogonal to an extending direction of the tube.

According to this configuration, the obstacle can be efficiently avoided, or an inspection range can be widened.

In addition, in the inspection device according to another aspect of the present invention, the inspection cable may be detachably fixed to the tube.

According to this configuration, the tube can be moved independently of the inspection cable in the vicinity of the target point, and the inspection range can be widened.

In addition, in the inspection device according to another aspect of the present invention, the inspection cable may have a cable body, the sensor provided in a tip of the cable body, a sheath covering the cable body and having thermal conductivity lower than that of the cable body, and a cooling fluid supply unit that supplies a cooling fluid into the sheath.

In addition, in the inspection device according to another aspect of the present invention, the tube may be configured to include a plurality of tube bodies connected to each other and deformable from an initial state. The plurality of tube bodies may have an active portion driven by the posture actuator, and a driven portion deforming in response to a movement of the active portion. The active portion and the driven portion may be alternately disposed in an extending direction of the tube. An elastic force may enable the driven portion to be restored to the initial state from a deformed state deformed in response to the movement of the active portion.

In addition, the inspection device according to another aspect of the present invention may further include a guide jig that guides the tube to a start point inside the inspection object. The inspection object may be a gas turbine including a turbine including a rotor rotating around an axis and having a plurality of rotor blades disposed in a circumferential direction and a plurality of stator blades disposed in the circumferential direction to correspond to the plurality of rotor blades, and a combustor that supplies combustion gas to the turbine. The guide jig may have a tubular guide tube extending along a center axis and into which the tube is insertable, a tubular leading tube provided in one end of the guide tube to be rotatable around a leading tube rotary shaft orthogonal to the center axis, formed to communicate with an interior of the guide tube, and into which the tube is insertable, a leading tube rotation unit that rotates the leading tube with respect to the guide tube, and a guide tube rotation unit that rotates the guide tube around the center axis. The guide tube and the leading tube may have a size insertable from an upstream end of the combustor to an outlet of the combustor.

According to this configuration, the tube can easily reach from the upstream side of the combustor to the inlet of the turbine simply by inserting the tube into the guide jig.

In addition, according to another aspect of the present invention, there is provided an inspection method using an inspection device having an inspection tube including a flexible tube into which an inspection cable having a sensor in a tip is insertable, a posture actuator capable of adjusting a posture of the tube, and an advancing and retreating actuator that causes the tube to advance and retreat. The inspection method includes an inverse analysis step of performing an analysis to move the tube along a predetermined route in an inspection object from a start point to a target point of the predetermined route, a forward analysis step of acquiring an operation amount of each of the posture actuator and the advancing and retreating actuator when the tube is located at each position on the route, as an analysis operation amount, based on an analysis result in the inverse analysis step, an operation amount acquisition step of acquiring the analysis operation amount, as the operation amount of each of the posture actuator and the advancing and retreating actuator, and a drive step of driving the posture actuator and the advancing and retreating actuator, based on the operation amount acquired in the operation amount acquisition step.

In addition, according to another aspect of the present invention, there is provided a program for an inspection device having an inspection tube including a flexible tube into which an inspection cable having a sensor in a tip is insertable, a posture actuator capable of adjusting a posture of the tube, and an advancing and retreating actuator that causes the tube to advance and retreat. The program for an inspection device causes a computer to execute a process including an inverse analysis step of performing an analysis to move the tube along a predetermined route in an inspection object from a start point to a target point of the predetermined route, a forward analysis step of acquiring an operation amount of each of the posture actuator and the advancing and retreating actuator when the tube is located at each position on the route, as an analysis operation amount, based on an analysis result in the inverse analysis step, an operation amount acquisition step of acquiring the analysis operation amount, as the operation amount of each of the posture actuator and the advancing and retreating actuator, and a drive step of driving the posture actuator and the advancing and retreating actuator, based on the operation amount acquired in the operation amount acquisition step.

In addition, according to another aspect of the present invention, there is provided a guide jig used for an inspection device, an inspection object of which is a gas turbine including a turbine including a rotor rotating around an axis and having a plurality of rotor blades disposed in a circumferential direction and a plurality of stator blades disposed in the circumferential direction to correspond to the plurality of rotor blades, and a combustor that supplies combustion gas to the turbine, the inspection device including an inspection cable in which a sensor capable of inspecting an interior of the inspection object is provided in a tip, and a flexible tube into which the inspection cable is insertable. The guide jig includes a tubular guide tube extending along a center axis and into which the tube is insertable, a tubular leading tube provided in one end of the guide tube to be rotatable around a leading tube rotary shaft orthogonal to the center axis, formed to communicate with an interior of the guide tube, and into which the tube is insertable, a leading tube rotation unit that rotates the leading tube with respect to the guide tube, and a guide tube rotation unit that rotates the guide tube around the center axis. The guide tube and the leading tube have a size insertable from an upstream end of the combustor to an outlet of the combustor.

Advantageous Effects of Invention

According to the present invention, the tube can accurately reach the target inspection position even in a region which is less likely to be visible.

Brief Description of Drawings

Fig. 1 is a schematic view illustrating a schematic configuration of a gas turbine having a turbine serving as an inspection object of an inspection method in the present embodiment.

Fig. 2 is a schematic view illustrating a schematic configuration around a combustor for describing an inspection device.

Fig. 3 is a schematic view illustrating a schematic configuration for describing a tube and a posture actuator.

Fig. 4 is an enlarged view of a main part of the tube, which illustrates a tube body and a wire.

Fig. 5 is a sectional view of a main part of the tube body, which illustrates a position for attaching the wire in the tube body of a tip.

Fig. 6 is a sectional view of a main part of the tube body, which illustrates a position for attaching the wire in another tube body adjacent to the tube body of the tip.

Fig. 7 is a sectional view of a main part, which illustrates a structure of the posture actuator.

Fig. 8 is a schematic view illustrating a state where the tube is inserted into a deep portion inside the turbine.

Fig. 9 is a schematic view for describing a schematic configuration of a guide jig according to the present embodiment.

Fig. 10 is a view illustrating a hardware configuration of a drive control device of the present embodiment.

Fig. 11 is a functional block diagram of the drive control device of the present embodiment.

Fig. 12 is a flowchart illustrating an inspection method of the present embodiment.

Fig. 13 is a schematic view illustrating a route of the present embodiment.

Fig. 14 is an enlarged view of a main part, which illustrates a part A in Fig. 13.

Fig. 15 is a schematic view illustrating a state where a position of an i-th tube body from a leading tube body deviates from the route.

Fig. 16 is a sectional view taken along line B-B in Fig. 15 for describing a deviation amount from the route in the i-th tube body from the leading tube body.

Fig. 17 is a block diagram illustrating a feedback model for performing control to reduce a binding force of two tube bodies.

Fig. 18 is a schematic view for describing a state where the tube is moved to change an orientation of the leading tube body of the tube.

Fig. 19 is a schematic view for describing a state where the leading tube body of the tube is moved in parallel.

Fig. 20 is a schematic view illustrating a first modification example of the inspection device of the present embodiment.

Fig. 21 is a schematic view illustrating a state where inspection is performed by using the first modification example of the inspection device of the present embodiment.

Fig. 22 is a schematic view illustrating a second modification example of the inspection device of the present embodiment.

Fig. 23 is a schematic view illustrating a modification example of an inspection cable of the present embodiment.

Fig. 24 is a schematic view illustrating a modification example of the tube of the present embodiment.

Fig. 25 is a schematic view illustrating a state where the tube of the present embodiment is disposed to be wound around a rotor blade and a stator blade.

Description of Embodiments

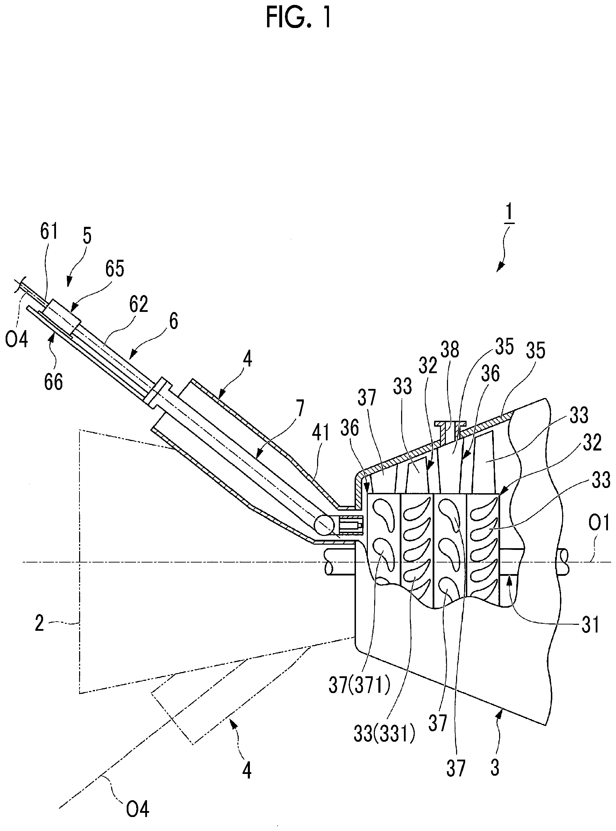

Hereinafter, an embodiment according to the present invention will be described with reference to Figs. 1 to 19.

First, an inspection object serving as a target of an inspection method S1 of using an inspection device 5 will be described. The inspection object in the present embodiment is a turbine 3 of a gas turbine 1.

As illustrated in Fig. 1, the gas turbine 1 includes a compressor 2 that generates high-pressure air, a turbine 3 driven by combustion gas, and a plurality of combustors 4 that generates the combustion gas by mixing and combusting a fuel with the high-pressure air to supply the combustion gas to the turbine 3.

The turbine 3 has a turbine rotor 31 that rotates around an axis O1 and a turbine casing 35 that covers the turbine rotor 31 from an outer peripheral side. The turbine rotor 31 has a columnar shape extending along the axis O1. A plurality of turbine rotor blade stages 32 arrayed at an interval in a direction of the axis O1 which is an extending direction of the axis O1 are provided on an outer peripheral surface of the turbine rotor 31. Each of the turbine rotor blade stages 32 has a plurality of rotor blades 33 disposed in parallel at an interval in a circumferential direction around the axis O1 on the outer peripheral surface of the turbine rotor 31.

The turbine casing 35 has a tubular shape formed around the axis O1. A plurality of turbine stator blade stages 36 arrayed at an interval in the direction of the axis O1 are provided on an inner peripheral surface of the turbine casing 35. The turbine stator blade stages 36 are provided on an upstream side of each of the turbine rotor blade stages 32 to have a one-to-one correspondence with each of the turbine rotor blade stages 32. In this manner, the turbine stator blade stage 36 and the turbine rotor blade stage 32 are alternately disposed in the direction of the axis O1. Each of the turbine stator blade stages 36 has a plurality of stator blades 37 disposed in parallel at an interval in the circumferential direction on the inner peripheral surface of the turbine casing 35. In the present embodiment, the rotor blade 33 and the stator blade 37 which are disposed on a most upstream side inside the turbine casing 35 will be referred to as a first stage rotor blade 331 and a first stage stator blade 371. The turbine casing 35 is provided with a plurality of inspection ports 38 for confirming an interior from an exterior side. The inspection port 38 is formed to communicate with a space through which the rotor blade 33 or the stator blade 37 inside the turbine casing 35 can be confirmed.

The combustor 4 is provided in a connection portion between the compressor 2 and the turbine casing 35. A plurality of the combustors 4 are provided at an interval in the circumferential direction around the axis O1. The combustor 4 of the present embodiment has a hollow tubular combustion cylinder 41.

An air-fuel mixture of the high-pressure air compressed by the compressor 2 and fuel gas is combusted inside the combustion cylinder 41, thereby generating the combustion gas. The combustion cylinder 41 is a member having a tubular shape. A portion including an upstream side end portion of the combustion cylinder 41 extends, and is inclined to be close to the axis O1 as a virtual center axis O4 thereof is oriented from the compressor 2 toward the turbine 3. A downstream side end portion (outlet) of the combustion cylinder 41 is connected to an inlet of the turbine 3. In the combustion cylinder 41, a portion including the downstream side end portion is bent along the direction of the axis O1 with respect to a portion including the upstream side end portion.

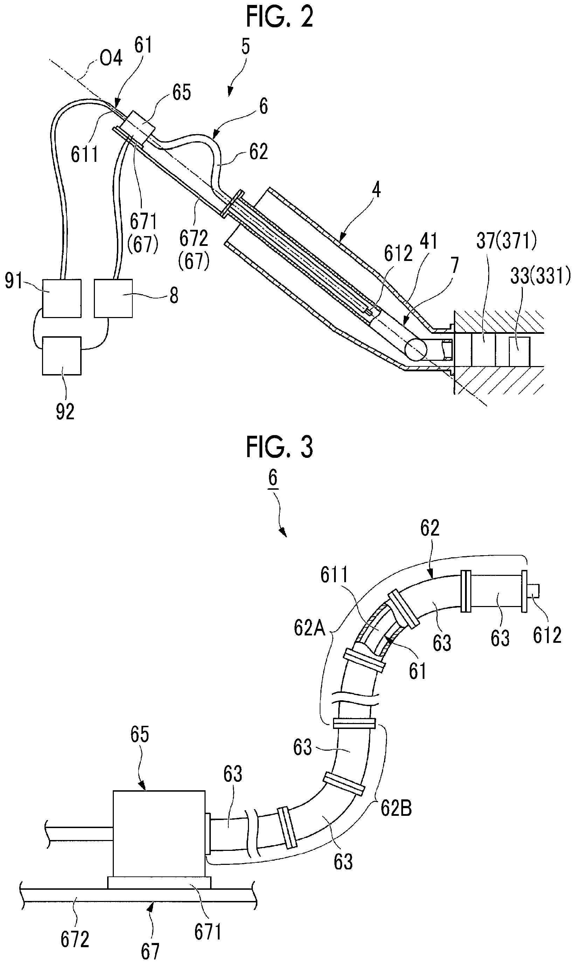

An inspection method S1 of the present embodiment is a non-destructive inspection for visually recognizing an interior of the turbine 3 without opening the turbine casing 35. In the inspection method S1, as illustrated in Fig. 2, an inspection device 5 using an inspection cable 61 having a sensor 612 in a tip is used. The interior of the turbine 3 is a space in which the rotor blade 33 and the stator blade 37 are disposed, which is a space in which the combustion gas flows inside the turbine casing 35.

The inspection device 5 is a device capable of confirming an interior of the turbine 3 from an exterior side. Since the inspection device 5 is fixed to the combustor 4, it is possible to visually recognize a narrow portion or a bent portion which is less likely to be visible inside the turbine 3 via the inside of the combustor 4. The inspection device 5 of the present embodiment includes an inspection cable 61, an inspection tube 6, a guide jig 7, a drive control device (drive control device for an inspection tube) 8, a camera image monitor 91, and a self-position display monitor 92.

The inspection cable 61 has a highly flexible cable body 611 and a sensor 612 provided in a tip of the cable body 611 and capable of inspecting the interior of the turbine 3. When an operator operates an operation unit (not illustrated), the cable body 611 can be bent in any desired direction intersecting with a cable extending direction which is an extending direction of the cable body 611. The cable body 611 is a member separated from the tube 62, and is detachably fixed to the tube 62. The cable body 611 is provided with a cable moving actuator (not illustrated) so that the cable body 611 can be driven independently of the inspection tube 6.

The sensor 612 is fixed to a tip of the cable body 611. The sensor 612 and the cable body 611 are incorporated in the tube 62. The sensor 612 of the present embodiment is a camera capable of imaging the interior of the turbine 3. Imaging data such as a video or an image captured by the sensor 612 are transmitted to the camera image monitor 91 via a cable extending from an end portion (rear end) on a side where the sensor 612 is not provided in the cable body 611. As the inspection cable 61 of the present embodiment, for example, a borescope (industrial endoscope) for observing or inspecting a deep portion which is not directly visible can be used.

The inspection cable 61 may have a bendable structure, and for example, may be a snake-shaped robot having an articulated structure in which a plurality of highly flexible members are connected.

In addition, the sensor 612 is not limited to those such as the camera as in the present embodiment. For example, the sensor 612 of the present embodiment may be a sensor 612 having a dimension measurement function (for example, three-dimensional phase measurement) or a sensor 612 capable of measuring a temperature and the presence or absence of a scratch.

The inspection tube 6 includes a tube 62, a posture actuator 65, and an advancing and retreating actuator 67.

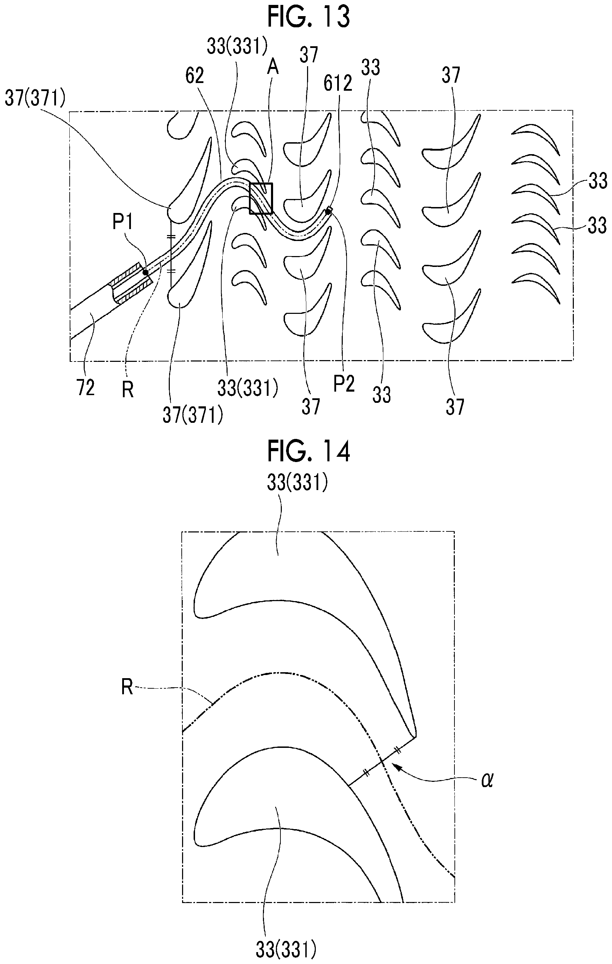

As illustrated in Fig. 3, the tube 62 internally has a hollow portion into which the inspection cable 61 can be inserted. The tube 62 is flexible. The tube 62 has an articulated structure that can be bent at a plurality of locations. Therefore, the tube 62 can be bent in any desired direction intersecting with a tube extending direction which is an extending direction of the tube 62. It is preferable that each joint portion of the tube 62 has a structure which is easily bent. On the other hand, the structure is less likely to be twisted and is less likely to be compressed. An outer diameter of the tube 62 is set to a size that can be inserted into a narrow portion $\alpha$ (refer to Fig. 14) inside the combustor 4 and between the rotor and stator blades of the turbine 3. The cable body 611 is attachable to and detachable from the tube 62. The tube 62 of the present embodiment is configured so that a plurality of tube bodies 63 are connected to each other.

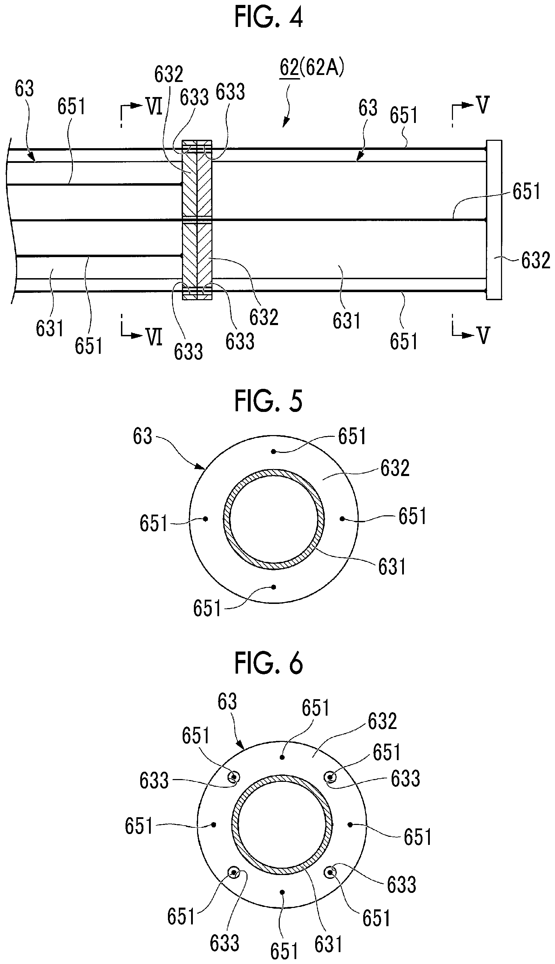

The plurality of tube bodies 63 are disposed in parallel in the extending direction of the tube body 63, and are connected to each other. The tube body 63 is deformable from an initial state where the tube body 63 linearly extends along a center axis thereof to a deformed state where the tube body 63 is bent and deformed. As illustrated in Fig. 4, the tube body 63 has a tubular portion 631 having both open ends and a flange portion 632 protruding outward in a radial direction from outer peripheral surfaces of both ends of the tubular portion 631. The tubular portion 631 has a cylindrical shape into which the inspection cable 61 can be inserted. For example, a plurality of slits (not illustrated) are formed in the tubular portion 631 so that the tubular portion 631 can be bent in any desired direction. The flange portion 632 has an annular shape, and is formed integrally with the tubular portion 631.

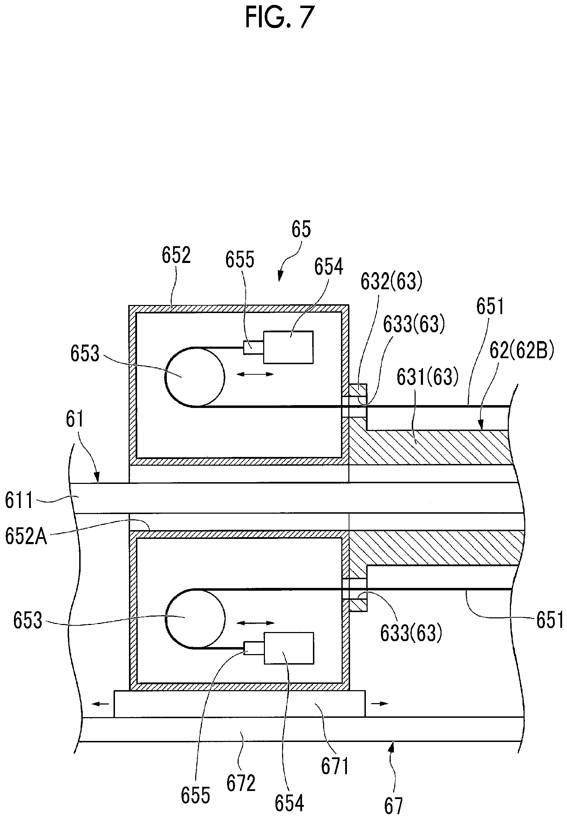

As illustrated in Fig. 3, the posture actuator 65 can adjust a posture of the tube 62. Here, the posture of the tube 62 is a position and an orientation of a tip of the tube 62 on a virtual plane intersecting with the tube extending direction. The posture actuator 65 of the present embodiment is fixed to a rear end of the tube 62. As illustrated in Fig. 7, the posture actuator 65 has a plurality of wires 651, a housing unit 652, a pulley 653, a wire drive unit 654, and a wire load detection unit 655.

As illustrated in Fig. 4, the plurality of wires 651 (for example, four wires in the present embodiment) are provided for one tube body 63. A tip of the wire 651 is fixed to the flange portion 632 located on the tip side of the tube body 63. As illustrated in Fig. 5, the wires 651 are fixed apart from each other to be out of phase with respect to one flange portion 632 (for example, 90 degrees) . In addition, the wires 651 are disposed to be out of phase with each of the adjacent tube bodies 63. Therefore, as illustrated in Fig. 6, for example, compared to one tube body 63 disposed on the tip side, a fixed position of the wire 651 deviates by 45 degrees in the other adjacent tube body 63 on a rear end side. Therefore, the flange portion 632 of the tube body 63 on the rear end side has a wire insertion hole 633 for inserting the wire 651 fixed to the tube body 63 disposed on the tip side from the tube body 63. Therefore, the more wire insertion holes 633 are formed in the tube body 63 disposed at a position closest to a most rear end.

As illustrated in Fig. 7, the housing unit 652 is fixed to a rear end of the tube 62. One end of the wire 651 is housed inside the housing unit 652. The housing unit 652 has a housing through-hole 652A into which the cable body 611 protruding from the rear end of the tube 62 can be inserted. The housing through-hole 652A is formed to penetrate the housing unit 652.

The pulley 653 is attached in a rotatable state inside the housing unit 652. The pulley 653 reverses the extending direction of the wire 651 inside the housing unit 652. The pulley 653 is provided for each of the wires 651. That is, one pulley 653 is provided for one of the wires 651. A plurality of the pulleys 653 are provided apart from each other to surround the housing through-hole 652A.

The wire drive unit 654 is fixed inside the housing unit 652. The wire drive unit 654 is provided for each of the wires 651. That is, one wire drive unit 654 is provided for one of the wires 651. The wire drive unit 654 is connected to a rear end of the wire 651 which is an end portion on a side not fixed to the tube body 63 in the wire 651, via the wire load detection unit 655. The wire drive unit 654 enables the wire 651 to advance and retreat with respect to the pulley 653. As the wire drive unit 654, for example, an electric slider, an electric cylinder, or a ball screw can be used.

The wire load detection unit 655 is disposed between the rear end of the wire 651 and the wire drive unit 654. The wire load detection unit 655 measures a load (wire tensile force) generated in the wire 651, and transmits a measurement result to the wire drive unit 654. When the transmitted measurement result is equal to or greater than a value determined to be excessively great (for example, a value that may damage the wire 651), the wire drive unit 654 drives the wire 651 to be loosened. In addition, when the transmitted measurement result is equal to or smaller than a value determined to be excessively small (for example, a value at which the wire 651 is bent), the wire drive unit 654 drives the wire 651 to be stretched to such an extent that the wire 651 is not loosened. For example, the wire load detection unit 655 may be a load cell that can directly measure a load. In addition, as alternative means, the load may be indirectly measured, based on a motor current value in the wire drive unit 654.

In addition, the posture actuator 65 drives some of the tube bodies 63 disposed at positions close to the tip out of the plurality of tube bodies 63. The number of the tube bodies 63 driven by the posture actuator 65 may be one or more. As illustrated in Fig. 3, the tube 62 of the present embodiment is divided into an active portion 62A driven by the posture actuator 65 and a driven portion 62B which is not driven (deformed or moved) by the posture actuator 65.

In the active portion 62A, the wire 651 is fixed to the flange portion 632 of each of the tube bodies 63. The active portion 62A is a region having a predetermined length from the tip in the tube 62. Here, the predetermined length is a length that can reach a desired inspection range.

The driven portion 62B is movable in response to a movement of the active portion 62A. In the driven portion 62B, the wire 651 is not fixed to the flange portion 632 of each of the tube bodies 63. The driven portion 62B is a region from the rear end to the active portion 62A in the tube 62. The driven portion 62B of the present embodiment is a region interposed between the housing unit 652 and the active portion 62A.

As illustrated in Fig. 2, the advancing and retreating actuator 67 enables the tube 62 to advance and retreat. Here, advancing and retreating of the tube 62 means moving the tube 62 in the tube extending direction. The advancing and retreating actuator 67 of the present embodiment can move the housing unit 652 to which the tube 62 is fixed. The advancing and retreating actuator 67 has a guide rail 672 and an advancing and retreating drive unit 671.

The guide rail 672 can be fixed to an upstream end of the combustor 4 via the guide jig 7. The guide rail 672 of the present embodiment extends parallel to the virtual center axis O4 of the portion including the upstream side end portion of the combustion cylinder 41 in a state where the guide rail 672 is fixed to the combustor 4.

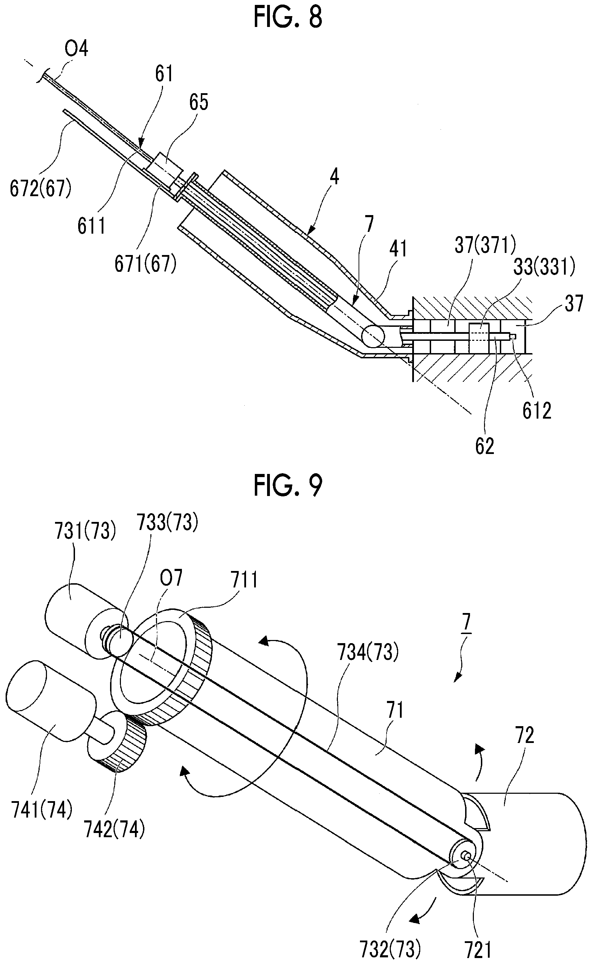

The advancing and retreating drive unit 671 moves on the guide rail 672. A housing unit 652 is fixed to the advancing and retreating drive unit 671. For example, the advancing and retreating drive unit 671 is an electric slider. As illustrated in Fig. 8, the advancing and retreating drive unit 671 moves on the guide rail 672 to be close to a position connected to the combustor 4. In this manner, the tube 62 is inserted into a deep portion (downstream side) inside the turbine 3. On the other hand, as illustrated in Fig. 2, the advancing and retreating drive unit 671 moves on the guide rail 672 to be away from the position connected to the combustor 4. In this manner, the tube 62 moves from the deep portion inside the turbine 3 to the vicinity of the inlet (upstream side) of the turbine 3.

The guide jig 7 guides the tube 62 from the exterior of the gas turbine 1 to the interior of the turbine 3. The guide jig 7 of the present embodiment is inserted into the combustion cylinder 41 from the upstream side of the combustor 4. In this manner, the tip of the tube 62 is guided from the exterior of the combustor 4 to the outlet (vicinity on the upstream side of the first stage stator blade 371 inside the turbine 3) of the combustor 4. As illustrated in Fig. 9, the guide jig 7 has a guide tube 71, a leading tube 72, a leading tube rotation unit 73, and a guide tube rotation unit 74.

The guide tube 71 extends along a center axis O7. The guide tube 71 is a cylindrical member into which the tube 62 can be inserted. The guide tube 71 is formed to be longer than the portion including the upstream side end portion extending along the virtual center axis O4 in the combustion cylinder 41. The leading tube 72 is connected to the tip of the guide tube 71. A guide tube flange portion 711 is formed in the rear end of the guide tube 71, which is a side opposite to an end portion on the side where the leading tube 72 is provided. In the rear end of the guide tube 71, the guide tube flange portion 711 protrudes outward in the radial direction from the outer peripheral surface to form an annular shape. A gear is formed on an outer peripheral surface of the guide tube flange portion 711. The guide tube 71 can be fixed to the combustor 4 in a state where the guide tube flange portion 711 is located outside.

As in the guide tube 71, the leading tube 72 is a cylindrical member into which the tube 62 can be inserted. The rear end of the leading tube 72 is supported to be rotatable by the guide tube 71 via the leading tube rotary shaft 721. The leading tube rotary shaft 721 extends in a direction orthogonal to the center axis O7. The leading tube rotary shaft 721 connects the leading tube 72 and the guide tube 71 to be rotatable. The tip of the leading tube 72 is a free end. The leading tube 72 is formed to be shorter than the guide tube 71. The leading tube 72 has the length approximately the same as the length of the portion including the downstream side end portion in the combustion cylinder 41.

The leading tube rotation unit 73 rotates the leading tube 72 with respect to the guide tube 71. The leading tube rotation unit 73 has a leading tube rotation motor 731, a leading tube side pulley 732, a motor side pulley 733, and a wire portion 734. The leading tube rotation motor 731 is provided to be located outside the combustor 4 when the guide jig 7 is attached to the combustor 4. The leading tube side pulley 732 is fixed to the leading tube rotary shaft 721. The motor side pulley 733 is fixed to a drive shaft of the leading tube rotation motor 731. The wire portion 734 has an endless shape, and is hung on the leading tube side pulley 732 and the motor side pulley 733. In this manner, the leading tube rotation motor 731 is driven to rotate the motor side pulley 733. The rotation of the motor side pulley 733 is transmitted to the leading tube side pulley 732 via the wire portion 734, and the leading tube side pulley 732 rotates together with the leading tube rotary shaft 721. In this manner, the leading tube 72 rotates around the leading tube rotary shaft 721.

The guide tube rotation unit 74 rotates the guide tube 71 around the center axis O7. The guide tube rotation unit 74 has a guide tube rotation motor 741 and a guide tube rotation gear 742. The guide tube rotation motor 741 is disposed so that the guide tube rotation gear 742 meshes with the guide tube flange portion 711 outside the combustor 4 when the guide jig 7 is attached to the combustor 4. The guide tube rotation gear 742 is fixed to a drive shaft of the guide tube rotation motor 741. In this manner, the guide tube rotation motor 741 is driven to rotate the guide tube rotation gear 742. The guide tube rotation gear 742 rotates to rotate the guide tube flange portion 711 meshing therewith. In this manner, the guide tube 71 rotates around the center axis O7 together with the leading tube 72.

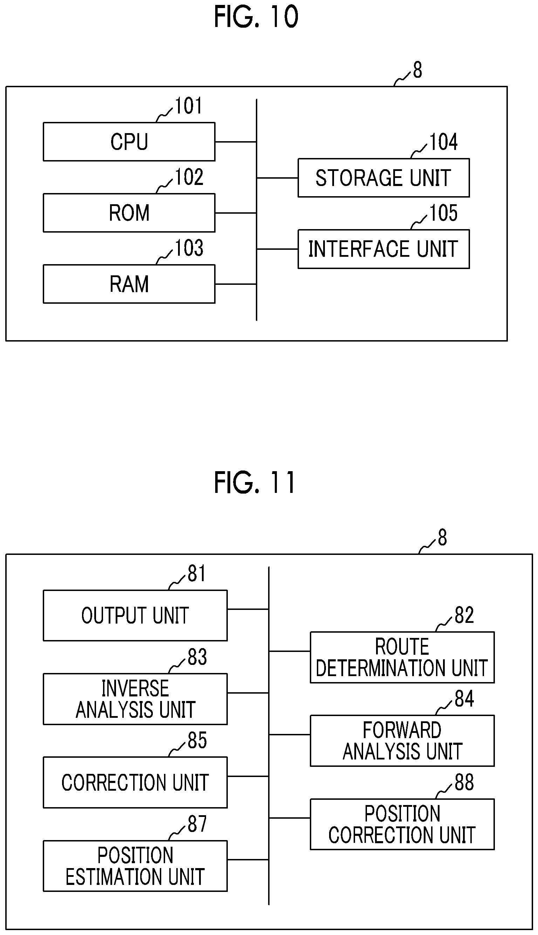

As illustrated in Fig. 2, the drive control device 8 can control the movement of the tube 62 by transmitting a signal to the posture actuator 65 and the advancing and retreating actuator 67. As illustrated in Fig. 10, the drive control device 8 is a computer including a central processing unit (CPU) 101, a read only memory (ROM) 102, a random access memory (RAM) 103, a storage unit 104, and an interface unit 105. Signals are exchanged between the posture actuator 65 and the advancing and retreating actuator 67, and the camera image monitor 91 and the self-position display monitor 92 (to be described later) via the interface unit 105.

The CPU 101 is a processor that controls an entire operation of the drive control device 8. The CPU 101 is operated in accordance with a program prepared in advance to fulfill various functions (to be described later).

The ROM 102 is a non-volatile memory that cannot be rewritten. The RAM 103 is a rewritable volatile memory. The ROM 102 and the RAM 103 are also called main storage devices, and programs for operating the CPU 101 to fulfill various functions are developed.

The storage unit 104 is a large-capacity storage device (non-volatile memory) incorporated in the drive control device 8, and for example, is a hard disk drive (HDD) or a solid state drive (SSD). The storage unit 104 is also called an auxiliary storage device, and stores three-dimensional shape data inside the turbine 3 (to be described later), data acquired by a preliminary test or a simulation, and information required in advance such as a program for operating the CPU 101.

As illustrated in Fig. 11, the CPU 101 of the drive control device 8 executes a program stored in a host device in advance to fulfill each function of an output unit 81, a route determination unit 82, an inverse analysis unit 83, a forward analysis unit 84, a correction unit 85, a position estimation unit 87, and a position correction unit 88.

The output unit 81 performs drive controls for starting and stopping the posture actuator 65 and the advancing and retreating actuator 67, or various controls for starting and stopping each function of the drive control device 8. The output unit 81 outputs information acquired by each functional unit to the posture actuator 65, the advancing and retreating actuator 67, and the self-position display monitor 92.

The route determination unit 82 acquires the three-dimensional shape data inside the turbine 3 which is stored in advance. The route determination unit 82 determines a route R, based on the acquired three-dimensional shape data. Here, as illustrated in Fig. 13, the route R is a course to a target point P2 to be inspected (checked) from a start point P1 where the tip of the tube 62 is first disposed inside the turbine 3 in the inspection method S1 of the present embodiment. The start point P1 is a point where the tip of the tube 62 is located before the inspection starts. The start point P1 in the present embodiment is a connection portion between the inlet of the turbine 3 and the outlet of the combustor 4, and is the vicinity of the upstream end of the first stage stator blade 371. The target point P2 is any desired inspection position inside the turbine 3 such as the stator blade 37 or the rotor blade 33 serving as an inspection target.

The inverse analysis unit 83 performs analysis to move the tube 62 along the route R from the start point P1 to the target point P2, based on information on the route R which is determined by the route determination unit 82. The inverse analysis unit 83 performs a simulation in which the tip of the tube 62 virtually advances on the route R so that the tube 62 does not deviate from the route R over an entire region.

Based on an analysis result of the inverse analysis unit 83, the forward analysis unit 84 acquires an operation amount of the posture actuator 65 and the advancing and retreating actuator 67 when the tube 62 is located at each position on the route R, as an analysis operation amount.

The correction unit 85 acquires a self-weight deflection amount of the tube 62 which is caused by a self-weight of the tube 62. The correction unit 85 corrects the analysis operation amount, based on the self-weight deflection amount. The self-weight deflection amount is a movement amount of the tube 62 moving downward in a vertical direction, such as slackening caused by the weight of the tube 62.

The position estimation unit 87 estimates a position and a posture of the tip of the tube 62 inside the turbine 3, based on the analysis operation amount and the information on the route R which is determined by the route determination unit 82.

Imaging information captured by the sensor 612 is input to the position correction unit 88. The position correction unit 88 corrects a deviation of the position and the posture of the actual sensor 612 with respect to the position and the posture of the tube 62 which are estimated by the position estimation unit 87, based on the input imaging information.

The camera image monitor 91 displays an image captured by the sensor 612. The imaging information captured by the sensor 612 is input to the camera image monitor 91 from the inspection cable 61. In addition, the imaging information input to the camera image monitor 91 is transmitted to the self-position display monitor 92 and the drive control device 8.

The self-position display monitor 92 displays the route R on the three-dimensional shape data inside the turbine 3, and a current position and a current posture of the tube 62. The information on the route R from the drive control device 8 and the information on the position and the posture of the tube 62 which are estimated by the position estimation unit 87 are input to the self-position display monitor 92. The self-position display monitor 92 displays the estimated current position and the estimated current posture of the tube 62 on the route R, based on the input information.

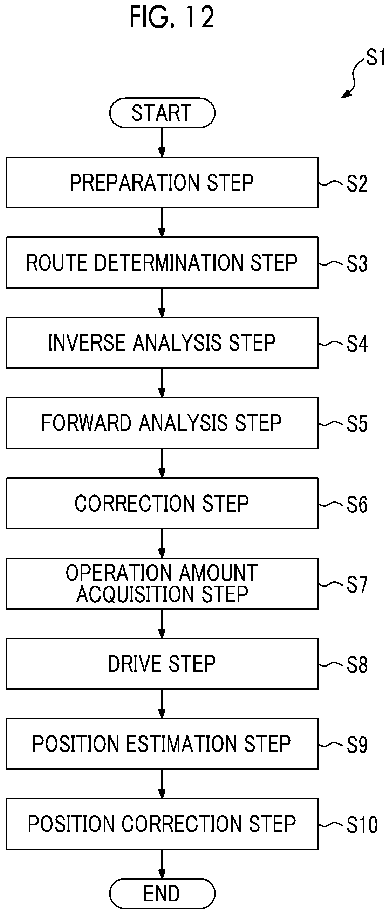

Next, the inspection method S1 of using the inspection device 5 will be described in order with reference to Figs. 12 to 14. The inspection method S1 of the present embodiment includes a preparation step S2, a route determination step S3, an inverse analysis step S4, a forward analysis step S5, a correction step S6, an operation amount acquisition step S7, a drive step S8, and a position estimation step S9, and a position correction step S10.

In the preparation step S2, the inspection device 5 is prepared. The prepared inspection device 5 is attached to the combustor 4 of the gas turbine 1. Specifically, the guide jig 7 is inserted into the combustion cylinder 41 from the upstream end of the combustor 4. When the guide jig 7 is inserted, the leading tube 72 is rotated with respect to the guide tube 71 by the leading tube rotation unit 73 so that the center axis of the leading tube 72 is coaxial with the center axis O7 of the guide tube 71. In this state, the guide jig 7 is inserted into the combustion cylinder 41 until the tip of the leading tube 72 reaches a bent portion (region where the portion including the upstream side end portion and the portion including the downstream side end portion intersect with each other) of the combustion cylinder 41. Thereafter, the leading tube 72 is rotated by the leading tube rotation unit 73 with respect to the guide tube 71 so that the center axis of the leading tube 72 is approximately horizontal without coming into contact with an inner wall of the combustion cylinder 41. At the same time, the guide jig 7 is further inserted into the deep portion of the combustion cylinder 41. As a result, when the tip of the leading tube 72 reaches the outlet of the combustion cylinder 41, the center axis of the leading tube 72 is horizontal. That is, the leading tube 72 is parallel to the portion including the downstream side end portion of the combustion cylinder 41. In this state, the guide tube 71 is rotated by the guide tube rotation unit 74 so that the tip of the leading tube 72 faces a gap between front edges of the first stage stator blades 371 adjacent to each other in the circumferential direction. The guide tube rotation unit 74 is driven to be synchronized with the leading tube rotation unit 73. As a result, while the guide tube 71 rotates around the center axis O7, the leading tube 72 synchronously rotates around the leading tube rotary shaft 721. In this manner, the guide tube 71 rotates while the leading tube 72 is always oriented horizontally, and the tip of the leading tube 72 faces the gap between the front edges of the first stage stator blades 371 adjacent to each other in the circumferential direction. In this state, the guide jig 7 is fixed to the combustor 4.

After the guide jig 7 is attached, the inspection tube 6 is fixed to the guide jig 7 in the preparation step S2. Specifically, the tube 62 fixed in a state where the inspection cable 61 is inserted into the tube 62 is inserted into the guide jig 7 by an operator. At the same time, the guide rail 672 is fixed to the guide tube flange portion 711. In this manner, as illustrated in Fig. 2, in a state where the advancing and retreating drive unit 671 is disposed at a lowest position (position where the advancing and retreating drive unit 671 is farthest apart from the guide tube flange portion 711) with respect to the guide rail 672, the tube 62 in a bent state is gradually stretched, and the tip of the tube 62 faces the vicinity of the tip of the leading tube 72. As a result, as illustrated in Fig. 1, the tip of the tube 62 reaches the tip of the leading tube 72, and is disposed in the vicinity of the outlet of the combustion cylinder 41.

In the route determination step S3, the route determination unit 82 determines the route R in which the tube 62 moves from the start point P1 to the target point P2. Specifically, as illustrated in Fig. 13, the route determination unit 82 acquires the three-dimensional shape data which is data on the shape or the disposition of the rotor blades 33 and the stator blades 37 in each stage inside the turbine casing 35, from the storage unit 104. The route determination unit 82 uses the acquired three-dimensional shape data as map information, and determines the route R that does not come into contact with the rotor blade 33 or the stator blade 37. In this case, based on the acquired three-dimensional shape data, the route determination unit 82 determines the route R to pass through at least one of an intermediate position between the rotor blades 33 adjacent to each other in the circumferential direction and a central position between the stator blades 37 adjacent to each other in the circumferential direction. Here, for example, as illustrated in Fig. 14, the route R is determined to pass through the intermediate position of a narrow portion $\alpha$ having narrowest interval in the rotor blades 33 (or the stator blades 37) adjacent to each other. Furthermore, it is more preferable that the route R is determined to pass through the intermediate position of the rotor blades 33 (or the stator blades 37) adjacent to each other over an entire region from the upstream side to the downstream side, even in a region other than the narrow portion $\alpha$.

In the inverse analysis step S4, the inverse analysis unit 83 performs a simulation to move the tube 62 on the route R. Specifically, while the inverse analysis unit 83 virtually bends the plurality of tube bodies 63 on a three-dimensional analysis model so that the tube 62 is forcibly moved in a state of being restrained on the route R, the inverse analysis unit 83 performs a simulation to move the tip of the tube 62 from the start point P1 to the target point P2. At this time, the simulation is performed so that the center of the leading flange portion 632 of each of the tube bodies 63 in the active portion 62A passes on the route R. According to this simulation, since the tube body 63 moves, the posture actuator 65 and the advancing and retreating actuator 67 are inversely moved. In this manner, the operation amounts of the posture actuator 65 and the advancing and retreating actuator 67 are inversely analyzed. Here, the operation amount of the posture actuator 65 is a movement amount of the wire 651 which is caused to advance and retreat by the wire drive unit 654 corresponding to each of the wires 651 in order to change the posture of the tube 62 (refer to Fig. 7). Therefore, the operation amount of the posture actuator 65 is changed, thereby bringing the respective wires 651 into a state where there is a stroke difference between the respective wires 651. Therefore, the tip of the tube 62 can have a desired posture by operating the posture actuator 65 so that there is the stroke difference between the wires 651. In addition, the operation amount of the advancing and retreating actuator 67 is a movement amount of the advancing and retreating drive unit 671 which is caused to advance and retreat with respect to the guide rail 672 in order to cause the tube 62 to advance and retreat with respect to the start point P1 (refer to Fig. 7).

In the forward analysis step S5, the forward analysis unit 84 performs a forward analysis, and in the simulation performed by the inverse analysis unit 83, and acquires an operated amount which is the operation amount of the posture actuator 65 and the advancing and retreating actuator 67 which are moved as the tube 62 moves in the simulation performed by the inverse analysis unit 83. Specifically, when the tip of the tube 62 is located at a certain point on the route R, a displacement of the wire drive unit 654 corresponding to the wire 651 fixed to each of tube bodies 63 in the active portion 62A and a displacement of the advancing and retreating drive unit 671 are respectively calculated. Since the displacements are calculated at a plurality of locations on the route R, the operated amounts of the posture actuator 65 and the advancing and retreating actuator 67 are acquired at any desired points on the route R. In the forward analysis step S5, the operated amount is acquired as an analysis operation amount.

In the correction step S6, the correction unit 85 corrects a deviation from the route R which is caused by a self-weight of the tube 62. Since the actual tube 62 has a certain weight, the tube 62 may be loosened due to the weight, and even when the tube 62 is moved as in the simulation, there is a possibility that the tube 62 may deviate from the route R. Therefore, in the correction step S6, the movement amount (deviation amount) due to the self-weight of the tube 62 at each point on the route R is calculated as a self-weight deflection amount. Specifically, the correction unit 85 corrects the analysis operation amount by using PID control, for example.

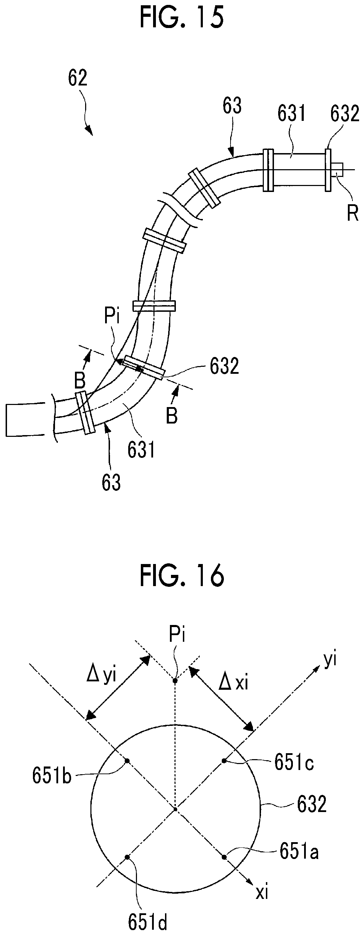

More specifically, as illustrated in Fig. 15, the operation amount acquired by the forward analysis unit 84 does not take into consideration of the self-weight deflection amount. Accordingly, a deviation (deviation) occurs at the position (center position of the flange portion 632 between the tube bodies 63 adjacent to each other) of the tube body 63 with respect to the route R. For example, a deviation amount ($\triangle$xi, $\triangle$yi) from a point Pi on the route R in the $i^{-th}$ tube body 63 from a leading tube body is calculated, based on a local coordinate system in each of the tube bodies 63. As illustrated in Fig. 16, the coordinate system is determined by the number and the position of the wires 651 attached to the tube body 63. For example, when four wires 651 are used as in the present embodiment, in Fig. 16, the coordinate system is determined, based on an xi-axis passing through a first wire 651a and a second wire 651b and a yi-axis passing through a third wire 651c and a fourth wire 651d.

Here, the deviation amount ($\triangle$xi, $\triangle$yi) is corrected by performing the PID control on the operation amount of each of the wires 651, based on Equations (1) and (2) below.

[Equation 1]

```
wire   tensile   amount   on   xi-axis=current   wire   tensile

amount+Kp×Δxi+Ki×∫(Δxi)dt+Kd×d(Δxi)/dt    (1)

wire          tensile          amount          on          yi-axis=current  wire  tensile  amount+Kp×Δyi+Ki×∫(Δyi)dt+Kd×d(Δ

yi)/dt   (2)
```

Here, Kp, Ki, and Kd are respectively correction coefficients. Correction according to the deviation amount ($\triangle$xi, $\triangle$yi) is performed by the term Kp. A steady-state deviation of the deviation amount ($\triangle$xi, $\triangle$yi) is reduced by the term Ki. Responsiveness is improved, and the deviation is reduced by the term Kd.

For example, when the deviation amount ($\triangle$xi) on the xi-axis is a negative value (deviates to the second wire 651b side) by performing the correction in this way, the second wire 651b on the xi-axis is pulled. The deviation amount ($\triangle$xi) on the xi-axis decreases by moving the flange portion 632 of the tube body 63 leftward and upward in Fig. 16. In addition, when the deviation amount ($\triangle$yi) on the yi-axis is a positive value (deviates to the third wire 651c side), the third wire 651c on the yi-axis is pulled. The deviation amount ($\triangle$yi) on the yi-axis decreases by moving the flange portion 632 of the tube body 63 rightward and upward in Fig. 16.

In addition, the tube 62 is forcibly moved in a state of being restrained on the route R. In this manner, a binding force for staying on the route R is virtually generated in the tube 62 on an analysis basis. The correction unit 85 may further correct the analysis operation amount to reduce the binding force.

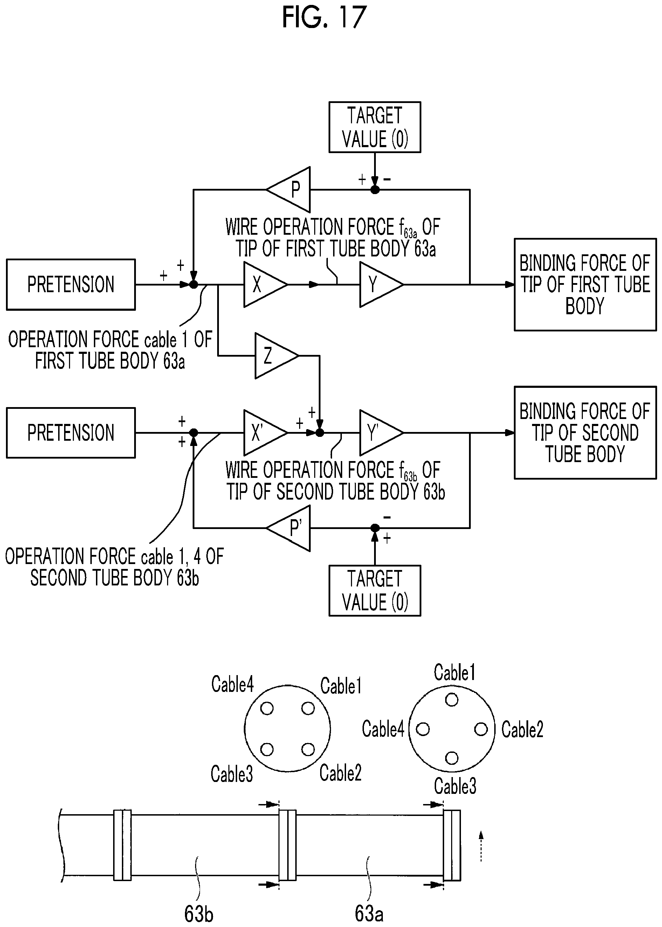

Specifically, for example, the correction unit 85 performs the correction, based on a feedback model as illustrated in Fig. 17. Fig. 17 illustrates the feedback model in which two adjacent tube bodies 63 are used as an example. Sequentially from the leading tube body, the tube bodies will be referred to as a first (leading) tube body 63a and a second tube body 63b. In the feedback model, in the first tube body 63a, a force that is P times the binding force of the tip of the first tube body 63a is added to pretension which is a minimum wire tensile amount needed to maintain a state where the wire 651 is not loosened, and an operation force cable1 of the first tube body 63a is generated. A process X is performed to reduce a resistance value (loss such as friction) generated in the wire 651, and a wire operation force $f_{63a}$ of the tip of the first tube body 63a is generated. Here, the wire operation force $f_{63a}$ of the tip of the first tube body 63a decreases than the operation force cable1 of the first tube body 63a as much as the friction between the wire 651 and the intermediate flange portion 632. A binding force of the tip of the first tube body 63a is generated by the wire operation force $f_{63a}$ and a mechanism analysis (internal dynamic model Y). The feedback control is performed on the logic so that the binding force of the tip of the first tube body 63a is close to a target value 0. Furthermore, in the second tube body 63b, in addition to the control the same as that of the first tube body 63a described above, the operation force cable1 in the front first tube body 63a is added, and the wire operation force $f_{63b}$ of the tip of the second tube body 63b is calculated. The feedback control is performed on the logic so that the binding force of the tip of the second tube body 63b is close to the target value 0.

The inverse analysis is performed, based on the feedback model, and the analysis operation amount of the wire 651 is acquired in a state where the binding force of each of the tube bodies 63 is close to the target value. In this manner, the analysis operation amount corrected to reduce the binding force is acquired.

In the operation amount acquisition step S7, the corrected analysis operation amounts are respectively acquired as the operation amounts of the posture actuator 65 and the advancing and retreating actuator 67.

In the drive step S8, the posture actuator 65 and the advancing and retreating actuator 67 are driven by the output unit 81. Specifically, in the drive step S8, information on the acquired operation amount is transmitted from the output unit 81 to the posture actuator 65 and the advancing and retreating actuator 67, and the posture actuator 65 and the advancing and retreating actuator 67 are respectively driven. In this manner, the advancing and retreating drive unit 671 moves on the guide rail 672, and the wire drive unit 654 moves the wire 651. In this manner, as illustrated in Figs. 8 and 13, the tube 62 passes between the stator blade 37 and the rotor blade 33, and advances to a deep portion of the turbine 3. As a result, the tip of the actual tube 62 is moved from the start point P1 toward the target point P2.

In the position estimation step S9, the position estimation unit 87 estimates the position and the posture of the tip of the tube 62 inside the turbine 3 after the tip of the tube 62 moves to the target point P2.

In the position correction step S10, imaging information captured by the sensor 612 is input to the position correction unit 88. The position correction unit 88 analyzes and acquires virtual image data to be observed by the sensor 612 at the position and the posture which are estimated in the position estimation step S9, based on the information on the analysis operation amount and the route R and the three-dimensional shape data. The position correction unit 88 collates the acquired virtual image data with the input imaging information. The position correction unit 88 calculates the operated amounts of the posture actuator 65 and the advancing and retreating actuator 67 for moving the position and the posture of the tube 62 so that the imaging information coincides with the virtual image data. In the position correction step S10, the posture actuator 65 and the advancing and retreating actuator 67 are driven, based on the calculated operated amount. In this manner, the deviation of the position and the posture of the actual sensor 612 with respect to the estimated position and posture of the tube 62 is corrected. That is, the position and the posture of the actual sensor 612 are adjusted to the estimated position and posture of the tube 62. In this manner, the tip of the tube 62 reaches a position corresponding to the target point P2 inside the actual turbine 3.

After reaching the target point P2, the tip of the tube 62 or the tip of the inspection cable 61 (sensor 612) is moved, and an inspection range is widened to perform the inspection. Specifically, when the tip of the tube 62 is moved, an operator operates an operation unit (not illustrated) while confirming the image of the camera image monitor 91 or a display content of the self-position display monitor 92. In this manner, a signal is transmitted from the output unit 81 to the posture actuator 65 so that every tube bodies 63 adjacent to each other perform different movements.

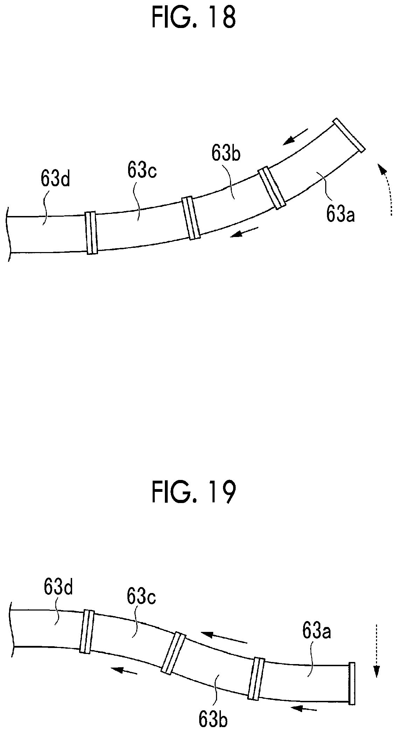

For example, as illustrated in Fig. 18, the posture actuator 65 moves the tip of the tube 62 to be bent. That is, the tube 62 is moved to change a facing direction of the tip of the tube 62. At this time, for example, the tube 62 has a structure in which the plurality of tube bodies 63 are connected. Accordingly, each of the tube bodies 63 is affected by the movement of the wire 651 of each of the tube bodies 63, and is moved so that predetermined curvature deformation is bent. This characteristic is utilized to move the wire 651 with respect to the adjacent tube body 63 by a different operation amount. In this manner, only the tip of the tube 62 is moved to be bent. Specifically, sequentially from the leading tube body, the tube bodies will be referred to as the first (leading) tube body 63a, the second tube body 63b, the third tube body 63c, and the fourth tube body 63d. In this case, when the operation amount of the wire 651 that moves the first tube body 63a upward in Fig. 18 is defined as $\Delta d$, in the second tube body 63b, the wire 651 is moved by the same operation amount $\Delta d$ so that the wire 651 moves downward on a side opposite to the movement of the first tube body 63a. In this manner, the movement from the second tube body 63b to a root is offset, and only the tip of the first tube body 63a is moved to be bent.

In addition, as illustrated in Fig. 19, the posture actuator 65 moves the tip of the tube 62 in parallel along a virtual plane orthogonal to the tube extending direction. That is, not only the tip of the tube 62 is swung to change the facing direction of the tip of the tube 62, but also the tube 62 is moved upward and downward or leftward and rightward while the tip of the tube 62 faces in a constant direction. Specifically, when the operation amount of the wire 651 that moves the first tube body 63a downward in Fig. 19 is defined as $\Delta d$, in the second tube body 63b, the wire 651 is moved by the operation amount $2\Delta d$ which is twice the operation amount of the first tube body 63a so that the wire 651 moves upward on a side opposite to the movement of the first tube body 63a. Furthermore, in the third tube body 63c, the wire 651 is moved by the same operation amount $\Delta d$ so that the wire 651 moves downward in the same manner as the movement of the first tube body 63a. In this manner, the bending of the first tube body 63a is offset, the first tube body 63a is moved to be laterally shifted, and the tip of the first tube body 63a is moved in parallel.

In addition, when the inspection cable 61 is moved, for example, after the inspection cable 61 reaches the target point P2, an operator unfixes the cable body 611 from the tube 62. Thereafter, the operator operates the cable body 611 by an operation unit (not illustrated) while confirming the image of the camera image monitor 91 or the display content of the self-position display monitor 92. As a result, the cable body 611 advances from the tip of the tube 62. In this case, as in the case of the tube 62, the tip portion of the cable body 611 may be moved so that a neck is bent. In this manner, the inspection range can be widened to perform the inspection.

According to this configuration, the inverse analysis unit 83 performs a simulation to move the tube 62 along the route R, and the forward analysis unit 84 acquires the analysis operation amount, based on a simulation result. Therefore, the operation amounts of the posture actuator 65 and the advancing and retreating actuator 67 which are needed to move the tube 62 in accordance with the predetermined route R can be recognized as the analysis operation amount. The interior of the turbine casing 35 cannot be visually recognized. Moreover, the plurality of stator blades 37 and the plurality of rotor blades 33 which have complicated shapes are disposed to be aligned in the circumferential direction and the direction of the axis O1. Therefore, the route R to the target point P2 is extremely complicated. However, even when the route R is complicated in this way, the analysis operation amount is acquired to prevent contact with an obstacle such as the rotor blade 33 and the stator blade 37, and the tube 62 can be properly moved inside the turbine 3. Therefore, the tip of the tube 62 can accurately reach the target point P2 without damaging the interior of the turbine 3. In this manner, the tube 62 can accurately reach a deep target inspection position even in a region which is less likely to be visible.

In addition, the route R using characteristics of the tube 62 having multiple degrees of freedom is determined in advance, and the tube 62 is moved in accordance with the determined route R. Therefore, the inspection can be performed by preventing the following disadvantages. Before the tube 62 reaches the target point P2 inside the turbine 3, the tube 62 may come into contact with the rotor blade 33 or the stator blade 37 in the narrow portion α. Consequently, the tube 62 may be clogged, may be caught on the rotor blade 33 or the stator blade 37, or may be unable to move forward to a deep portion. As a result, even in a region which is less likely to be visible, the inspection can be accurately performed by using the sensor 612 without opening the turbine casing 35.

In addition, the route determination unit 82 determines the route R, based on the three-dimensional shape data inside the turbine 3. Therefore, the accurate route R is determined, based on exact information inside the turbine 3. Therefore, the tube 62 can be moved along the exact route R to the target point P2. Therefore, it is possible to prevent contact with the rotor blade 33 or the stator blade 37 when the tube 62 is moved inside the turbine 3.

In particular, the route determination unit 82 determines the route R to pass through the intermediate position of the narrow portion α having the narrowest interval in the rotor blades 33 and the stator blades 37 which are adjacent to each other. Therefore, when the actual tube 62 moves, even when the tube 62 deviates slightly from the route R, the tube 62 does not come into contact with the rotor blade 33 or the stator blade 37. Therefore, it is possible to further prevent the contact with the obstacle when the tube 62 is moved inside the turbine 3. In this manner, it is possible to prevent damage to the rotor blade 33 or the stator blade 37 which is caused by the movement of the tube 62 inside the turbine 3.

In addition, the correction unit 85 corrects the movement amount generated by the weight of the tube 62. Therefore, it is possible to prevent the influence of the weight of the actual tube 62, and the tube 62 can be moved in a form close to the simulation result obtained by the inverse analysis unit 83. Therefore, the tube 62 can be more accurately moved.

In addition, when the actual tube 62 is moved based on the analysis operation amount, in some cases, a final position (position of the sensor 612) of the tip of the tube 62 may deviate from the simulation result due to an error of various devices or a deviation of the actual start point P1. However, in the present embodiment, the position of the actual sensor 612 is confirmed, based on the image actually captured by the sensor 612. Based on the result, the position correction unit 88 can acquire the operation amounts of the posture actuator 65 and the advancing and retreating actuator 67 for adjusting the position and the posture of the actual sensor 612 to the estimated position and the estimated posture of the sensor 612. In this manner, the deviation of the position and the posture of the actual tube 62 can be corrected. Therefore, the tube 62 can be more accurately moved to the target point P2 in the simulation.

In addition, the tip of the tube 62 can be moved in parallel along the virtual plane orthogonal to the tube extending direction. Therefore, the sensor 612 can be moved in parallel with a blade surface of the rotor blade 33 or the stator blade 37, and the obstacle can be efficiently avoided or the inspection range can be widened.

In addition, the cable body 611 can be attached to and detached from the tube 62. Therefore, after the tip of the tube 62 reaches the target point P2, the inspection cable 61 having the sensor 612 in the tip can be moved with respect to the tube 62. In this manner, a field of view in the vicinity of the target point P2 can be widened, and the inspection range can be widened.

In addition, the inspection tube 6 is inserted into the turbine 3 via the guide jig 7 having the leading tube 72 that rotates with respect to the guide tube 71. In the guide jig 7, the leading tube 72 is rotatable with respect to the guide tube 71. Accordingly, the leading tube 72 can be inserted into the deep portion inside the combustion cylinder 41 having an intermediately bent structure. Therefore, the leading tube 72 can reach the outlet of the combustion cylinder 41 without damaging the combustion cylinder 41. The tube 62 can easily reach the inlet of the turbine 3 from the upstream side of the combustor 4 simply by inserting the tube 62 into the guide jig 7. In addition, the guide tube 71 and the leading tube 72 are rotatable in synchronization with each other. Accordingly, the leading tube 72 can maintain a horizontal state while adjusting an orientation of the tip of the leading tube 72 in the circumferential direction. Therefore, it is easy to set the start point P1 at a desired position. Since the start point P1 can be set at the desired position, the tube 62 can easily reach the deep portion of the turbine 3.

(Other Modification Examples of Embodiment)

Hitherto, the embodiments of the present invention have been described in detail with reference to the drawings. However, the respective configurations and combinations thereof in the respective embodiments are merely examples. The configurations can be added, omitted, substituted, or modified within the scope not deviating from the concept of the present invention. In addition, the present invention is not limited by the embodiments, and is limited only by the appended claims.

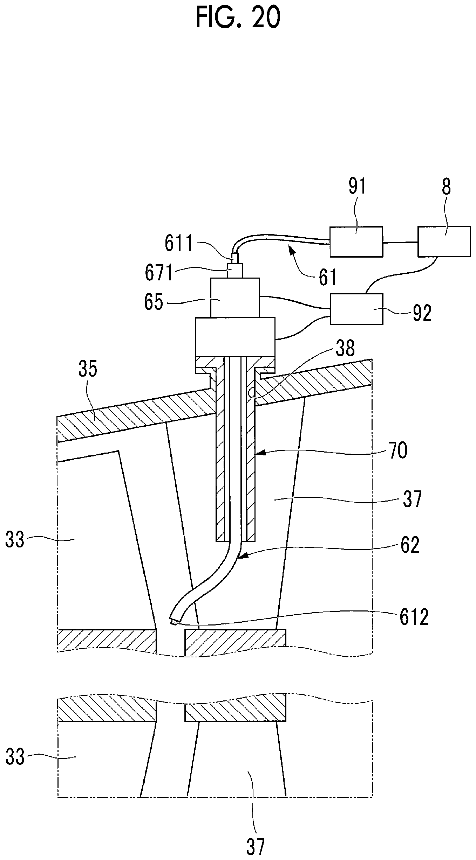

For example, in the above-described embodiment, the inspection device 5 is installed so that the tube 62 is inserted from the upstream side of the combustor 4. However, the installation is not limited to attachment in this way. For example, in a first modification example illustrated in Fig. 20, the inspection device 5 may be installed to insert the tube 62 from the inspection port 38 formed on a side surface of the turbine casing 35. In this case, a shape of the guide tube 70 of the guide jig 7 of the modification example may not be the shape as in the embodiment, and the guide tube 70 may be a linear pipe.

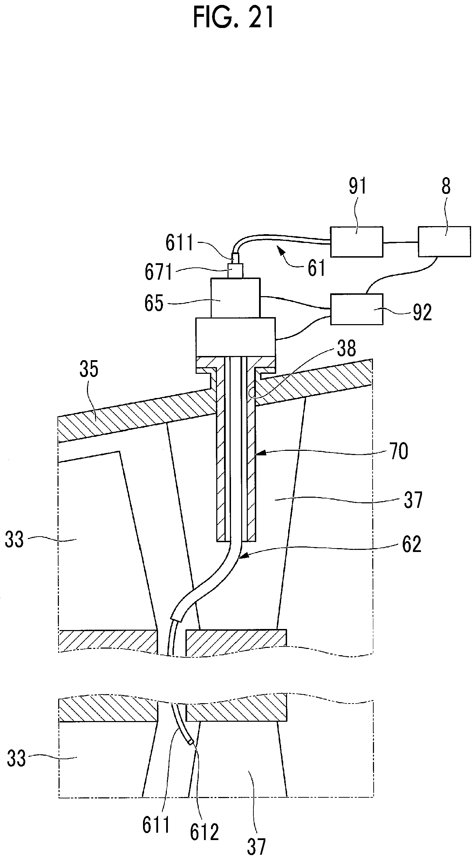

As illustrated in Fig. 21, in the inspection device of the first modification example, after the tip of the tube 62 passing through the guide tube 70 inserted from the inspection port 38 reaches the vicinity of a shroud of the rotor blade 33, an operator operates the cable body 611 by an operation unit (not illustrated) while confirming the image of the camera image monitor 91 or the display content of the self-position display monitor 92. As a result, the cable body 611 advances from the tip of the tube 62. The cable body 611 is moved to turn around the turbine rotor 31 in the circumferential direction, and reaches the rotor blade 33 or the stator blade 37 disposed in the vicinity of a side opposite to the inspection port 38 in the circumferential direction. In this way, the rotor blade 33 or the stator blade 37 disposed at any position in the circumferential direction can be inspected regardless of the position of the inspection port 38.

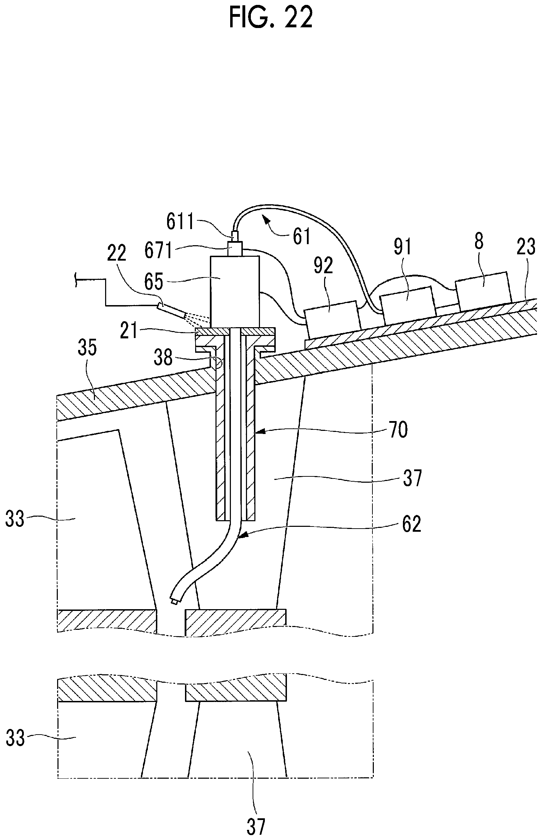

In addition, as illustrated in Fig. 22, as a second modification example, in the inspection device, the posture actuator 65 is fixed to the guide tube 70 via a heat insulator 21 formed of a material having thermal conductivity lower than that of the guide tube 70. In this manner, it is possible to prevent heat of the turbine casing 35 from being transferred to the posture actuator 65 or the tube 62.

In addition, the inspection device may further include a coolant injection unit 22 that injects a coolant toward the heat insulator 21. The coolant injection unit 22 can inject the coolant such as dry ice powder and air toward the heat insulator 21. Since the periphery of the heat insulator 21 is cooled by the coolant injection unit 22, it is possible to further prevent the heat of the turbine casing 35 from being transferred to the posture actuator 65 or the tube 62.

In addition, various devices disposed outside the turbine 3 which is an inspection object of the camera image monitor 91, the self-position display monitor 92, and the drive control device 8 may be disposed to be placed on the turbine casing 35 via a heat reserving material 23 wound around the outer peripheral surface of the turbine casing 35. The heat reserving material 23 is formed of a material through which the heat of the turbine casing 35 is less likely to be transferred to the camera image monitor 91, the self-position display monitor 92, and the drive control device 8. For example, the heat reserving material 23 may be the material the same as the heat insulator 21. Various devices disposed outside the turbine 3 are attached to the turbine casing 35. In this manner, it is possible to reduce a space for installing the camera image monitor 91, the self-position display monitor 92, and the drive control device 8. Therefore, it is not necessary to secure a large space around the turbine 3. In addition, various devices are attached to the turbine casing 35 via the heat reserving material 23. Accordingly, it is possible to prevent the heat of the turbine casing 35 from being transferred to the camera image monitor 91, the self-position display monitor 92, and the drive control device 8.

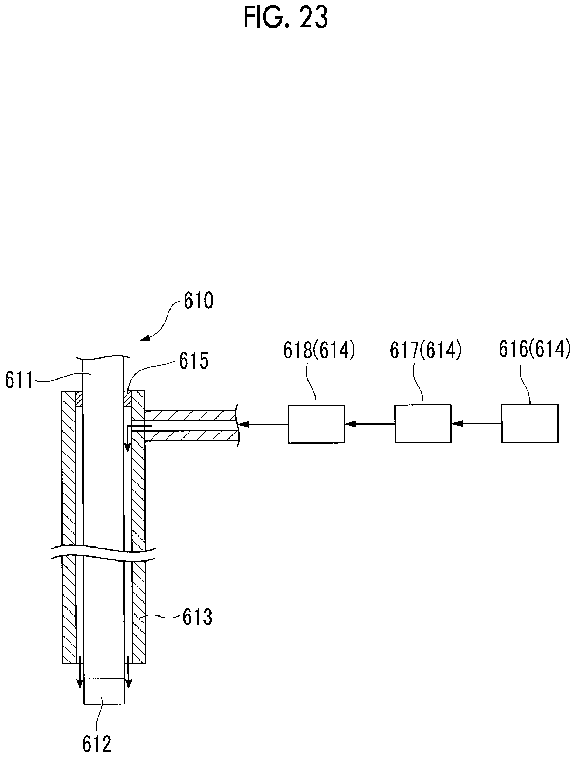

In addition, the inspection cable 61 is not limited to the structure of the above-described embodiment. For example, as a modification example, an inspection cable 610 may further have a sheath 613 that covers the cable body 611 and a cooling fluid supply unit 614 that supplies a cooling fluid into the sheath 613. As illustrated in Fig. 23, the sheath 613 has a tubular shape. A cable body 611 is fixed inside the sheath 613 in an inserted state. That is, the sheath 613 is movable and bendable together with the cable body 611. The sheath 613 is formed of a material having thermal conductivity lower than that of the cable body 611. An end portion on a rear side (position close to the camera image monitor 91) of the sheath 613 is closed by a seal 615. An end portion on a front side (position close to the sensor 612) of the sheath 613 is open.

The cooling fluid supply unit 614 supplies the cooling fluid to a gap between an inner peripheral surface of the sheath 613 and an outer peripheral surface of the cable body 611. For example, the cooling fluid to be supplied is cooling air used in the turbine 3. The cooling fluid supply unit 614 has a cooling fluid supply source 616, a cooler 617 that cools the cooling air supplied from the supply source 616, and a regulator 618 that adjusts the cooling air cooled by the cooler 617.

Since the sheath 613 is provided, a temperature of high temperature gas flowing inside the turbine 3 is less likely to be transferred to the cable body 611 disposed inside the sheath 613. Furthermore, the cooling fluid is supplied into the sheath 613 by the cooling fluid supply unit 614. Accordingly, the cooling fluid flows between the inner peripheral surface of the sheath 613 and the outer peripheral surface of the cable body 611. As a result, the cable body 611 is cooled by the cooling fluid. The cooling fluid that cools the cable body 611 is discharged into the turbine 3 through an opening on a front side of the sheath 613. Since the cable body 611 is cooled, it is possible to prevent the cable body 611 from having a high temperature due to a surrounding environment. As a result, even when the turbine 3 internally has the high temperature immediately after the turbine 3 is stopped, damage to the cable body 611 can be prevented to perform the inspection.

In addition, the tube 62 is not limited to a structure in which the active portion 62A is disposed in a front region (region having a predetermined length from the tip in the tube 62), and the driven portion 62B is disposed in a rear region (region from the rear end to the active portion 62A in the tube 62). For example, as a tube 620 of a modification example, the active portion 62A and the driven portion 62B may be alternately disposed in the extending direction of the tube 620.

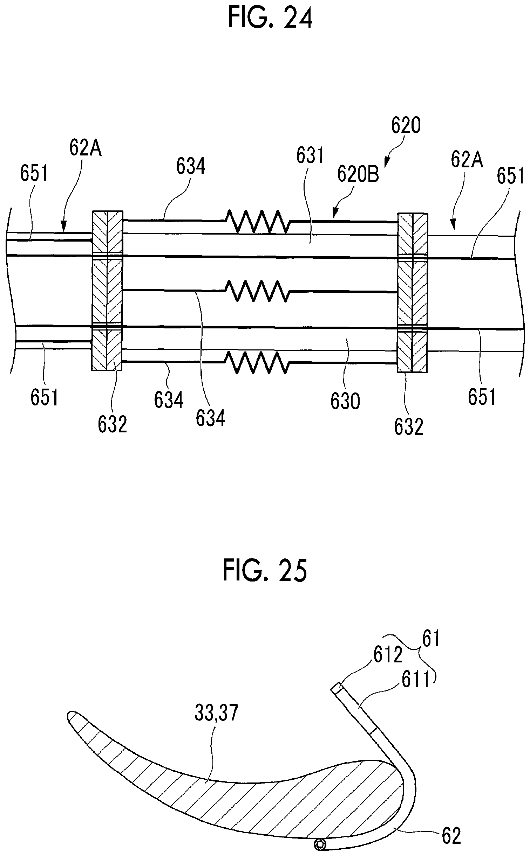

In this case, the driven portion 62B is not limited to a structure that is movable simply in response to the movement of the active portion 62A. For example, as illustrated in Fig. 24, as a modification example, a driven portion 620B may have a structure that can be restored by an elastic force to an initial state from a deformed state where the driven portion 620B is deformed in response to the movement of the active portion 62A. Specifically, in the driven portion 620B, a tube body 630 further has a plurality of (for example, four in the present embodiment) springs 634. The spring 634 connects flange portions 632 to each other in both ends outside the tubular portion 631. The spring 634 is a tension spring in which a tensile force is applied to attract the flange portions 632 in both ends. The plurality of springs 634 are evenly disposed apart in the circumferential direction. The spring 634 can generate a restoring force in the tube body 630 to return to the initial state. As a result, it is possible to secure bending rigidity of the driven portion 620B which is a portion that less contributes to bending in the tube 62.

The driven portion 620B is not limited to the configuration in which the restoring force for returning to the initial state is generated by the spring 634. The driven portion 620B may have any desired structure as long as the structure has an elastic force. For example, a rubber material may be used instead of the spring 634, or the tubular portion 631 itself may be formed of an elastically deformable material.

In addition, the tube 62 is not limited to the structure having the plurality of tube bodies 63 as in the present embodiment. For example, the tube 62 may have an articulated structure that can be bent at a plurality of locations by a structure in which pin joints are laminated while every phase is changed by 90 degrees or a structure in which spherical joints are laminated.

In addition, the inspection object is not limited to the turbine 3 of the gas turbine 1 as in the present embodiment. The inspection target portion may be a portion having a region which is less likely to be visible, such as an internally closed object. For example, the inspection object may be the compressor 2 or the combustor 4 in the gas turbine 1, or may be a rotary machine other than the gas turbine 1 such as a steam turbine.

In addition, the inspection cable 61 and the inspection tube 6 are not limited to the separate member which is attachable and detachable as in the present embodiment. That is, the inspection cable 61 and the inspection tube 6 may be one member fixed not to be attachable and detachable.

In addition, the tube 62 may be further provided with another detection device including a small MEMS inertial sensor (for example, a three-axis gyro and a three-axis accelerometer). When the detection device is provided, accuracy in estimating the position and the posture of the tube 62 can be improved.

In addition, the route R used for the analysis performed by the inverse analysis unit 83 is not limited to a configuration determined by the route determination unit 82. The route R may be separately determined in advance by an operator, and may be input from the outside.

In addition, the route determination unit 82 is not limited to a configuration in which the route R is automatically determined in advance. For example, the route R may be determined so that the route R is revised, based on an instruction (for example, operating an operation unit) from the operator while the tube 62 is moved. Specifically, when the operator inputs a new target point, the route determination unit 82 immediately generates the route R from the start point P1 to the new target point. The information on the route R may be used to calculate the analysis operation amount by performing the inverse analysis in the inverse analysis unit 83 or the forward analysis in the forward analysis unit 84.

In addition, the position correction step S10 is not limited to a configuration in which the position and the posture are automatically corrected by the position correction unit 88, based on the imaging information acquired by the sensor 612. For example, in the position correction step S10, when the operator confirms the image of the camera image monitor 91 or the display content of the self-position display monitor 92 and feels that the result deviates from the route R, or when the operator feels that the tube may come into contact with an obstacle such as a blade, the operator may operate an operation unit (not illustrated) to move the tube 62 or the inspection cable 61, and may correct the position and the posture.

In addition, in the route determination step S3, the present invention is not limited to a configuration in which the route R is determined to pass through at least one of the intermediate position between the rotor blades 33 adjacent to each other in the circumferential direction and the central position between the stator blades 37 adjacent to each other in the circumferential direction. For example, as illustrated in Fig. 25, the route R may be determined so that the tube 62 is wound around the rotor blade 33 or the stator blade 37. Since the tube 62 is brought into a state of being in contact with a blade surface of the rotor blade 33 or the stator blade 37, position holding capability of the tube 62 inside the turbine 3 is improved. Therefore, when the inspection cable 61 is moved to extend from the tip of the tube 62, the sensor 612 can be moved in a stable state.

In addition, a program for entirely or partially realizing functions of the drive control device 8 in the present invention may be recorded on a computer-readable recording medium, and the program recorded on the recording medium may be read and executed by a computer system. In this manner, processes may be entirely or partially performed by the drive control device 8. The term "computer system" described herein includes hardware such as an OS and a peripheral device. In addition, the "computer system" also include a WWW system provided with a homepage providing environment (or display environment). In addition, the "computer-readable recording medium" means a portable medium such as a flexible disk, a magneto-optical disk, a ROM, and a CD-ROM, or a storage device such as a hard disk incorporated in the computer system. Furthermore, the "computer-readable recording medium" includes those which hold the program for a certain period of time, such as a volatile memory (RAM) inside the computer system which functions as a server or client when a program is transmitted via a network such as the Internet or a communication channel such as a telephone line.

In addition, the above-described program may be transmitted from the computer system in which the program is stored in the storage device to another computer system via a transmission medium or by a transmission wave in the transmission medium. Here, the "transmission medium" for transmitting the program means a medium having a function of transmitting information, as in the network (communication network) such as the Internet or the communication channel (communication line) such as the telephone line. In addition, the above-described program may be for partially realizing the above-described functions. Furthermore, the above-described program may be a so-called difference file (difference program) which can realize the above-described functions in combination with the program previously recorded in the computer system.

Industrial Applicability

According to the present invention, the tube can accurately reach the target inspection position even in a region which is less likely to be visible.

Reference Signs List

1 gas turbine
2 compressor
3 turbine
O1 axis
31 turbine rotor
32 turbine rotor blade stage
33 rotor blade
35 turbine casing
36 turbine stator blade stage
37 stator blade
38 inspection port
331 first stage rotor blade
371 first stage stator blade
4 combustor
41 combustion cylinder
O4 virtual center axis
5 inspection device
6 inspection tube
61, 610 inspection cable
611 cable body
612 sensor
613 sheath
614 cooling fluid supply unit
615 seal
616 supply source
617 cooler
618 regulator

62,620 tube
63, 630 tube body
631 tubular portion
632 flange portion
633 wire insertion hole
634 spring
62A active portion
62B, 620B driven portion
65 posture actuator
651 wire
652 housing unit
652A housing through-hole
653 pulley
654 wire drive unit
655 wire load detection unit
67 advancing and retreating actuator
671 advancing and retreating drive unit
672 guide rail
7 guide jig
70 guide tube (insertion route on turbine casing inspection port side)
71 guide tube (insertion route on combustor side)
O7 center axis
711 guide tube flange portion
72 leading tube
721 leading tube rotary shaft
73 leading tube rotation unit
731 leading tube rotation motor
732 leading tube side pulley
733 motor side pulley
734 wire portion
74 guide tube rotation unit
741 guide tube rotation motor
742 guide tube rotation gear
8 drive control device
101 CPU
102 ROM
103 RAM
104 storage unit
105 interface unit
81 output unit
82 route determination unit
83 inverse analysis unit
84 forward analysis unit
85 correction unit
87 position estimation unit
88 position correction unit
R route
P1 start point
P2 target point
α narrow portion
91 camera image monitor
92 self-position display monitor
21 heat insulator
22 coolant injection unit
23 heat reserving material
S1 inspection method
S2 preparation step
S3 route determination step

S4 inverse analysis step
S5 forward analysis step
S6 correction step
S7 operation amount acquisition step
S8 drive step
S9 position estimation step
S10 position correction step

**Claims**

1. A drive control device for an inspection tube including a flexible tube into which an inspection cable having a sensor in a tip is insertable, a posture actuator capable of adjusting a posture of the tube, and an advancing and retreating actuator that causes the tube to advance and retreat, the drive control device for an inspection tube comprising:

   an inverse analysis unit that performs an analysis to move the tube along a predetermined route inside an inspection object from a start point to a target point of the predetermined route; and
   a forward analysis unit that acquires an operation amount of each of the posture actuator and the advancing and retreating actuator when the tube is located at each position on the route, as an analysis operation amount, based on an analysis result of the inverse analysis unit.

2. The drive control device for an inspection tube according to Claim 1, further comprising:
   a route determination unit that acquires three-dimensional shape data inside the inspection object in advance, and determines the route, based on the three-dimensional shape data.

3. The control device for an inspection tube according to Claim 2,
   wherein the inspection object is a turbine including a rotor rotating around an axis and having a plurality of rotor blades disposed in a circumferential direction, and a plurality of stator blades disposed in the circumferential direction to correspond to the plurality of rotor blades, and
   the route determination unit determines the route to pass at least one of an intermediate position between the rotor blades adjacent to each other and a central position between the stator blades.

4. The drive control device for an inspection tube according to any one of Claims 1 to 3, further comprising:
   a correction unit that acquires a self-weight deflection amount of the tube which is generated due to a self-weight of the tube, and corrects the analysis operation amount, based on the self-weight deflection amount.

5. An inspection device comprising:

   an inspection cable having a sensor in a tip;
   an inspection tube having a flexible tube into which the inspection cable is insertable, a posture actuator capable of adjusting a posture of the tube, and an advancing and retreating actuator that causes the tube to advance and retreat; and
   the drive control device for an inspection tube according to any one of Claims 1 to 4,
   wherein the drive control device for an inspection tube includes an output unit that controls driving the posture actuator and the advancing and retreating actuator, based on the analysis operation amount.

6. The inspection device according to Claim 5,
   wherein the sensor has a camera capable of imaging an interior of the inspection object, and
   the drive control device for an inspection tube has

   a position estimation unit that estimates a position and a posture of the tube inside the inspection object, based on the analysis operation amount and information on the route, and
   a position correction unit that corrects a deviation of a position and a posture of the actual tube with respect to the position and the posture of the tube which are estimated by the position estimation unit, based on imaging information captured by the sensor.

7. The inspection device according to Claim 5 or 6,
   wherein the posture actuator moves a tip of the tube in parallel along a virtual plane orthogonal to an extending direction of the tube.

8. The inspection device according to any one of Claims 5 to 7,
wherein the inspection cable is detachably fixed to the tube.

9. The inspection device according to any one of Claims 5 to 8,
wherein the inspection cable has

a cable body,
the sensor provided in a tip of the cable body,
a sheath covering the cable body and having thermal conductivity lower than that of the cable body, and
a cooling fluid supply unit that supplies a cooling fluid into the sheath.

10. The inspection device according to any one of Claims 5 to 9,
wherein the tube is configured to include a plurality of tube bodies connected to each other and deformable from an initial state,
the plurality of tube bodies have

an active portion driven by the posture actuator, and
a driven portion deforming in response to a movement of the active portion,

the active portion and the driven portion are alternately disposed in an extending direction of the tube, and
an elastic force enables the driven portion to be restored to the initial state from a deformed state deformed in response to the movement of the active portion.

11. The inspection device according to any one of Claims 5 to 10, further comprising:

a guide jig that guides the tube to a start point inside the inspection object,
wherein the inspection object is a gas turbine including a turbine including a rotor rotating around an axis and having a plurality of rotor blades disposed in a circumferential direction and a plurality of stator blades disposed in the circumferential direction to correspond to the plurality of rotor blades, and a combustor that supplies combustion gas to the turbine,
the guide jig has

a tubular guide tube extending along a center axis and into which the tube is insertable,
a tubular leading tube provided in one end of the guide tube to be rotatable around a leading tube rotary shaft orthogonal to the center axis, formed to communicate with an interior of the guide tube, and into which the tube is insertable,
a leading tube rotation unit that rotates the leading tube with respect to the guide tube, and
a guide tube rotation unit that rotates the guide tube around the center axis, and

the guide tube and the leading tube have a size insertable from an upstream end of the combustor to an outlet of the combustor.

12. An inspection method using an inspection device having an inspection tube including a flexible tube into which an inspection cable having a sensor in a tip is insertable, a posture actuator capable of adjusting a posture of the tube, and an advancing and retreating actuator that causes the tube to advance and retreat, the method comprising:

an inverse analysis step of performing an analysis to move the tube along a predetermined route in an inspection object from a start point to a target point of the predetermined route;
a forward analysis step of acquiring an operation amount of each of the posture actuator and the advancing and retreating actuator when the tube is located at each position on the route, as an analysis operation amount, based on an analysis result in the inverse analysis step;
an operation amount acquisition step of acquiring the analysis operation amount, as the operation amount of each of the posture actuator and the advancing and retreating actuator; and
a drive step of driving the posture actuator and the advancing and retreating actuator, based on the operation amount acquired in the operation amount acquisition step.

13. A program for an inspection device having an inspection tube including a flexible tube into which an inspection cable having a sensor in a tip is insertable, a posture actuator capable of adjusting a posture of the tube, and an advancing and retreating actuator that causes the tube to advance and retreat, the program for an inspection device causing a computer to execute a process comprising:

an inverse analysis step of performing an analysis to move the tube along a predetermined route in an inspection object from a start point to a target point of the predetermined route;

a forward analysis step of acquiring an operation amount of each of the posture actuator and the advancing and retreating actuator when the tube is located at each position on the route, as an analysis operation amount, based on an analysis result in the inverse analysis step;

an operation amount acquisition step of acquiring the analysis operation amount, as the operation amount of each of the posture actuator and the advancing and retreating actuator; and

a drive step of driving the posture actuator and the advancing and retreating actuator, based on the operation amount acquired in the operation amount acquisition step.

14. A guide jig used for an inspection device, an inspection object of which is a gas turbine including a turbine including a rotor rotating around an axis and having a plurality of rotor blades disposed in a circumferential direction and a plurality of stator blades disposed in the circumferential direction to correspond to the plurality of rotor blades, and a combustor that supplies combustion gas to the turbine, the inspection device including an inspection cable in which a sensor capable of inspecting an interior of the inspection object is provided in a tip, and a flexible tube into which the inspection cable is insertable, the guide jig comprising:

a tubular guide tube extending along a center axis and into which the tube is insertable;

a tubular leading tube provided in one end of the guide tube to be rotatable around a leading tube rotary shaft orthogonal to the center axis, formed to communicate with an interior of the guide tube, and into which the tube is insertable;

a leading tube rotation unit that rotates the leading tube with respect to the guide tube; and

a guide tube rotation unit that rotates the guide tube around the center axis,

wherein the guide tube and the leading tube have a size insertable from an upstream end of the combustor to an outlet of the combustor.

# FIG. 1

## FIG. 2

## FIG. 3

## FIG. 4

## FIG. 5

## FIG. 6

# FIG. 7

# FIG. 8

# FIG. 9

# FIG. 10

8

| | |
|---|---|
| CPU 101 | STORAGE UNIT 104 |
| ROM 102 | INTERFACE UNIT 105 |
| RAM 103 | |

# FIG. 11

8

| | |
|---|---|
| OUTPUT UNIT 81 | ROUTE DETERMINATION UNIT 82 |
| INVERSE ANALYSIS UNIT 83 | FORWARD ANALYSIS UNIT 84 |
| CORRECTION UNIT 85 | POSITION CORRECTION UNIT 88 |
| POSITION ESTIMATION UNIT 87 | |

# FIG. 12

S1

START

PREPARATION STEP — S2

ROUTE DETERMINATION STEP — S3

INVERSE ANALYSIS STEP — S4

FORWARD ANALYSIS STEP — S5

CORRECTION STEP — S6

OPERATION AMOUNT ACQUISITION STEP — S7

DRIVE STEP — S8

POSITION ESTIMATION STEP — S9

POSITION CORRECTION STEP — S10

END

## FIG. 13

## FIG. 14

## FIG. 15

## FIG. 16

# FIG. 17

TARGET VALUE (0)

+ −

P

WIRE OPERATION FORCE $f_{63a}$ OF TIP OF FIRST TUBE BODY 63a

PRETENSION

+ +

X

Y

BINDING FORCE OF TIP OF FIRST TUBE BODY

OPERATION FORCE cable 1 OF FIRST TUBE BODY 63a

Z

PRETENSION

+ +

X'

+ +

Y'

BINDING FORCE OF TIP OF SECOND TUBE BODY

WIRE OPERATION FORCE $f_{63b}$ OF TIP OF SECOND TUBE BODY 63b

OPERATION FORCE cable 1, 4 OF SECOND TUBE BODY 63b

P'

−

+

TARGET VALUE (0)

Cable4    Cable1

Cable1

Cable4          Cable2

Cable3    Cable2

Cable3

63b          63a

FIG. 18

63d 63c 63b

63a

FIG. 19

63d 63c

63a

63b

# FIG. 20

# FIG. 21

# FIG. 22

# FIG. 23

## FIG. 24

## FIG. 25

## INTERNATIONAL SEARCH REPORT

| International application No. |
| --- |
| PCT/JP2019/042729 |

| A. CLASSIFICATION OF SUBJECT MATTER |
| --- |
| Int.Cl. G01N21/84(2006.01)i, F01D25/00(2006.01)i, F02C7/00(2006.01)i |

According to International Patent Classification (IPC) or to both national classification and IPC

| B. FIELDS SEARCHED |
| --- |
| Minimum documentation searched (classification system followed by classification symbols)<br>Int.Cl. G01N21/84, F01D25/00, F02C7/00 |

| Documentation searched other than minimum documentation to the extent that such documents are included in the fields searched | |
| --- | --- |
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

| Electronic data base consulted during the international search (name of data base and, where practicable, search terms used) |
| --- |
| |

## C. DOCUMENTS CONSIDERED TO BE RELEVANT

| Category* | Citation of document, with indication, where appropriate, of the relevant passages | Relevant to claim No. |
| --- | --- | --- |
| X<br>A | US 2018/0209296 A1 (SIEMENS ENERGY, INC.) 26 July 2018, paragraphs [0010]-[0012], fig. 2-4 (Family: none) | 14<br>1-13 |
| A | JP 2015-534046 A (SIEMENS ENERGY, INC.) 26 November 2015, entire text, all drawings & US 2013/0192353 A1, entire text, all drawings & WO 2014/031957 A1 & KR 10-2015-0045503 A & CN 104620095 A | 1-14 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>04 December 2019 (04.12.2019) | Date of mailing of the international search report<br>17 December 2019 (17.12.2019) |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2019/042729

C (Continuation). DOCUMENTS CONSIDERED TO BE RELEVANT

| Category* | Citation of document, with indication, where appropriate, of the relevant passages | Relevant to claim No. |
|---|---|---|
| A | US 2015/0341600 A1 (SIEMENS ENERGY, INC.) 26 November 2015, entire text, all drawings & WO 2015/179057 A1 & DE 112015002404 T5 & CN 106460548 A | 1-14 |
| A | US 2015/0054939 A1 (SIEMENS ENERGY, INC.) 26 February 2015, entire text, all drawings & JP 2015-513026 A & WO 2014/031957 A1 & KR 10-2015-0045503 A & CN 104718446 A | 1-14 |
| A | JP 2008-8881 A (THE TOKYO ELECTRIC POWER CO., INC.) 17 January 2008, entire text, all drawings & US 2007/0296964 A1, entire text, all drawings | 1-14 |
| A | JP 9-5640 A (OLYMPUS OPTICAL CO., LTD.) 10 January 1997, entire text, all drawings (Family: none) | 1-14 |
| A | JP 1-216239 A (OLYMPUS OPTICAL CO., LTD.) 30 August 1989, entire text, all drawings & US 5090259 A, entire text, all drawings | 1-14 |
| A | JP 2017-26508 A (ICHIWA CO., LTD.) 02 February 2017, entire text, all drawings (Family: none) | 1-14 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018205303 A
- JP 2000162157 A